# EUROPÄISCHE PATENTANMELDUNG

(11) **EP 4 123 517 A1**
(43) Veröffentlichungstag der Anmeldung: **25.01.2023**
(21) Anmeldenummer: 22180351.3
(22) Anmeldetag: 22.06.2022
(51) Int. Cl.: G06N 5/02, G06F 40/279, G06F 16/27

(54) **INTEGRATION VERTEILTER MACHINE-LEARNING MODELLE**

(30) Priorität: 08.07.2021 DE 102021117711
(71) Anmelder: Bundesdruckerei GmbH, 10969 Berlin (DE)
(72) Erfinder: Wilke, Andreas, 13507 Berlin (DE); Komarov, Ilya, 14195 Berlin (DE); Paeschke, Manfred, 16348 Wandlitz (DE)
(74) Vertreter: Richardt Patentanwälte PartG mbB

(57) **Zusammenfassung**

Die Erfindung betrifft ein computerimplementiertes Verfahren zur Integration verteilter Machine-Learning Modelle, wobei das Verfahren umfasst:
- Bereitstellen (1402) mehrerer Vorhersageprogramme (406.1, 406.2, 406.3), die jeweils ein Machine-Learning (ML)-Modell (122.1, 122.2, 122.3) beinhalten;
- Trainieren (1404) der Modelle der Vorhersageprogramme auf unterschiedlichen Trainingsdaten;
- Synchronisation (1406) der Modelle derart, dass jedes Modell nach der Synchronisation die gleiche Tokenliste und den gleichen Satz an IO-Tupeln beinhaltet;
- Eingabe (1408) von Eingabedaten in eines der Vorhersageprogramme; und
- Berechnung (1410) einer Vorhersage auf Basis der Eingabedaten durch das eine Vorhersageprogramm unter Verwendung des synchronisierten Modells dieses einen Vorhersageprogrammes.

## Beschreibung

Die Erfindung betrifft ein Verfahren und ein Computersystem zur Integration verteilter Machine-Learning Modelle.

Aus dem Stand der Technik sind Verfahren und Systeme zum maschinellen Lernen ("ML") bekannt. Solche Systeme lernen anhand von Beispielen und können diese Beispiele nach Beendigung der Lernphase auf bisher unbekannte Daten anwenden. Die zugrundeliegenden Beispiele stellen Muster und Gesetzmäßigkeiten bereit, welche im Zuge eines Lerntransfers zur Beurteilung bisher unbekannter Daten herangezogen werden.

Anwendungen des maschinellen Lernens werden in vielen Branchen immer beliebter, da oftmals nur ML Programme in der Lage sind, komplexe, multivariate Abhängigkeiten zu erkennen und für die automatisierte Lösung verschiedener Berechnungs- und Vorhersageprobleme zu verwenden. Allerdings ist der Prozess der Entwicklung, Bereitstellung und kontinuierlichen Verbesserung ML-basierter Programme in der Regel komplexer und zeitlich wie technisch anspruchsvoller als bei herkömmlicher Software, wie beispielsweise einem Webservice oder einer mobilen Anwendung, deren Erstellung und Pflege in der Regel darauf beruht, technisch oder regulatorisch vorgegebene Workflows in expliziten Programmcode umzusetzen. MLbasierte Ansätze wie z.B. neuronale Netze können in der Regel nicht oder nicht einfach gezielt angepasst werden, da das Wissen, das ein neuronales Netz während des Trainings erworben hat, in Form von Gewichten an vielen Stellen der Netzwerkarchitektur gespeichert ist und damit in einer für einen Menschen nicht verständlichen Form, die eine gezielte Manipulation durch einen Programmierer weitgehend ausschließt. Das Verhalten von vielen derzeit verwendeten ML-Programmen ist komplex und schwer vorherzusagen, sodass es schwierig ist, diese zu erweitern und zu verbessern.

Ein besonderes Problem ergibt sich dann, wenn der gleiche ML-Algorithmus aufgrund verschiedener technischer Umstände auf unterschiedlichen Trainingsdaten für das gleiche Problem trainiert werden muss, sodass mehrere unterschiedliche Instanzen des trainierten ML-Programms entstehen. In diesem Fall werden die trainierten Modelle nämlich zumindest im Einzelfall für identische Eingaben unterschiedliche Vorhersagen zurückgeben, sodass letztlich eine Vielzahl unterschiedlicher ML-basierter Vorhersageprogramme entsteht, deren erlerntes Wissen nicht mehr vereinheitlicht werden kann, da das Wissen in Form von Softwarearchitekturelementen (z.B. Gewichte bei neuralen Netzwerken) gespeichert ist und sich somit einer Integration in eine zentrale Vorhersageinstanz entzieht.

Zwar ist es möglich, die dezentral erhobenen Trainingsdaten zu poolen und das ML-programm auf dem Datenpool zu trainieren, dies hat jedoch den Nachteil, dass u.U. sehr große Datenbestände (nämlich die Trainingsdaten, die je nach Problem Rohdaten von mehreren Terabyte umfassen können) zu einem zentralen Speichermedium bzw. Rechner transferiert werden müssen. Dies ist nachteilig im Hinblick auf den Netzwerkverkehr und ggf. auch im Hinblick auf die Datensicherheit, falls die Trainingsdaten sensible, insb. personenbezogene Daten enthalten.

Der Erfindung liegt die Aufgabe zugrunde, ein verbessertes Verfahren und System zur Integration von ML-Modellen zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein computerimplementiertes Verfahren zur Integration verteilter Machine-Learning Modelle. Das Verfahren umfasst:
- Bereitstellen mehrerer Vorhersageprogramme, die jeweils zur Berechnung des gleichen Vorhersageproblems dienen und die jeweils dazu konfiguriert sind, eine Vorhersagen auf Basis eines Machine-Learning (ML)-Modells zu berechnen;
- Trainieren der Modelle der Vorhersageprogramme auf unterschiedlichen Trainingsdaten, wobei die Trainingsdaten jeweils eine Vielzahl von Input-Datensätzen und Output-Datensätzen, die jeweils einem der Input-Datensätze zugeordnet sind, umfassen, wobei jeder Inputdatensatz eine Sequenz von ein oder mehreren Inputtoken ist und jeder Outputdatensatz eine Sequenz von ein oder mehreren Outputtoken ist, wobei das Training jedes der Modelle umfasst:
   o Erzeugung einer nichtredundanten Tokenliste aus den Inputtoken und Outputtoken, wobei jedes Token in der Tokenliste nur einmal vorkommt unabhängig davon, ob es ein Inputtoken und/oder ein Outputtoken repräsentiert, wobei jedes Token in der semantikfreien Liste verknüpft gespeichert ist mit Referenzen auf die jeweiligen Inputdatensätze und Outputdatensätze, die dieses Token beinhalten, sowie verknüpft gespeichert ist mit der Position des Tokens innerhalb des jeweiligen Input- oder Outputdatensatzes;
   ∘ Ermittlung von IO-Tupeln durch Analyse der Tokenliste, wobei IO-Tupel jeweils aus ein oder mehreren Inputtoken und ein oder mehreren Outputtoken bestehen, welche innerhalb einander zugeordneter Paare an Inputdatensätzen und Output-Datensätzen mit zumindest einer Mindeststärke korrelieren; und
   ∘ Speicherung des Tokenliste und der IO-Tupel als Ergebnis des Lernens in das Modell;
- Synchronisation der Modelle derart, dass jedes Modell nach der Synchronisation die gleiche Tokenliste und den gleichen Satz an IO-Tupeln beinhaltet;
- Eingabe von Eingabedaten in eines der Vorhersageprogramme; und
- Berechnung einer Vorhersage auf Basis der Eingabedaten durch das eine Vorhersageprogramm unter Verwendung des synchronisierten Modells dieses einen Vorhersageprogrammes.

Dies kann vorteilhaft sein, da die nicht-redundante Liste, die einen wesentlichen Teil des Modells darstellt, eine hoch komprimierte Version des in den Trainingsdaten enthaltenen Wissens repräsentiert: die nichtredundante Tokenliste enthält jedes Token nur einmal unabhängig davon, ob das Token in einem Inputdatensatz oder in mehreren Inputdatensätzen und/oder in einem Outputdatensatz oder in mehreren Output-datensätzen enthalten war, also unabhängig davon, ob das Token ein Inputtoken oder ein Outputtoken oder beides repräsentiert. Da aber jedes Token in der Liste verknüpft mit Referenzen auf alle (Input -und/oder Output-)Datensätze, die dieses Token enthalten, gespeichert ist, und vorzugsweise auch die Positionen des Tokens innerhalb dieses Datensatzes verknüpft mit der Referenz gespeichert sind, ist der Informationsgehalt der Datensätze vollständig oder weitgehend in der Tokenliste enthalten. Es ist möglich, dass je nach Anwendungsfall einzelne Token herausgefiltert werden, da sie als irrelevant gelten, und nicht in der Liste gespeichert werden. In diesem Fall tritt ein gewisser Informationsverlust ein, der jedoch je nach Anwendungsfall bewusst und gezielt in Kauf genommen wird, um den Speicherverbrauch weiter zu minimieren.

Beispielsweise kann es sich bei den Datensätzen und bei den aus diesen (z.B. durch Parsen bzw. Tokenisieren) gewonnen Token um alphanumerische Zeichenketten handeln, die in der Regel einen vergleichsweise hohen Speicherbedarf haben. Da die Token dynamisch aus den Datensätzen gewonnen werden, ist deren Gesamtlänge zudem unbekannt, sodass zur Speicherung von Token unweigerlich mehr Speicherplatz benötigt wird, als dies z.B. für Binärwerte vorbekannter Maximallänge nötig wäre. Vorzugsweise werden die Referenzen und/oder die Kombination von Referenzen auf die Herkunftsdatensätze und die Tokenpositionen als Datenwerte vordefinierter Größe, z.B. Bitsequenzen, vordefinierter Länge gespeichert.

Beispielsweise kann die Größe der Referenzen oder die Größe einer Kombination aus Datensatzreferenz und Tokenposition eine vordefinierte Länge haben, die groß genug ist, um für jeden von dem Vorhersageprogramm verarbeiteten Datensatz einen eindeutigen Identifikator, der zudem einen Vorhersageprogrammspezifischen Datenwert beinhaltet, erzeugen zu können, jedoch nicht größer.

Zusätzlich oder alternativ dazu kann die Größe der Referenzen (optional einschließlich der Tokenpositionsangabe) der Verarbeitungsbreite der Prozessorarchitektur entsprechen (z.B. 32 Bit oder 64 Bit). Insbesondere kann es sich bei den Referenzen um numerische Werte handeln, da diese von vielen Prozessortypen besonders effizient verarbeitet werden können.

Somit wird die in den Datensätzen enthaltene Information in sehr stark komprimierter Form in dem Modell gespeichert. Dies erleichtert die Synchronisation mehrerer Modelle, denn neues Wissen (neue Token die in neuen Eingabedatensätzen enthalten sind) werden dadurch in das Modell integriert, dass die Liste nur dann um ein Token erweitert wird, wenn dieses Token bisher noch nicht in der Liste enthalten war. Andernfalls stellt das Vorhersageprogramm fest, dass ein Token, das in einem Eingabedatensatz enthalten ist, bereits in der Liste enthalten ist und erweitert die Menge der mit diesem Token in der Liste verknüpft gespeicherten Referenzen um eine Referenz (und vorzugsweise auch die Position) des dieses Token beinhaltenden Eingabedatensatzes. Die Erweiterung der Liste um weitere Referenzen anstatt weiterer, redundanter Tokeneinträge bewirkt, dass der Speicherbedarf der Liste nicht linear mit der Menge an integrierten Rohdaten anwächst.

Das in der nichtredundanten Tokenliste (Liste an einzigartigen Token, die verknüpft mit Referenzen auf die diese enthaltenen Datensätze und Tokenpositionen in der Liste gespeichert sind) enthaltene Wissen kann aufgrund der stark komprimierten Form sehr leicht exportiert, importiert und/oder über ein Netzwert übertragen werden, um mehrere Modelle zu synchronisieren.

Bei den IO-Tupeln handelt es sich um Mengen von einander zugeordneten Inputtoken und Outputtoken, die besonders stark miteinander korrelieren. Auf welche Art die Korrelation ermittelt wird, kann dabei unterschiedlich sein. Je höher der erforderliche Korrelationsgrad des Auftretens, um ein IO-Tupel zu erkennen, desto weniger IO-Tupel werden auch erkannt und als Bestandteil des Modells gespeichert. Während also die Liste näherungsweise den Informationsgehalt der Rohdaten in komprimierter Form enthält, enthalten die IO-Tupel automatisch erlernte Muster, die angeben, welche Outputtoken im Outputdatensatz zu erwarten sind, wenn der Inputdatensatz ein oder mehrere Inputtoken (ggf. an bestimmten Positionen relativ zueinander) enthält.

Die IO-Tupel werden vorzugsweise ebenfalls in einer nichtredundanten Datenstruktur gespeichert, kommen in dieser Datenstruktur also nur ein einziges mal vor auch wenn ein bestimmtes IO-Tupel mehrfach in mehreren Paaren von Input- und Outputdatensätzen beobachtet wurde. Die IO-Tupel dieser Datenstruktur sind - wie die Token der Tokenliste - verknüpft mit den Referenzen der Input- und Output-Datensätze, in welchen das IO-Tupel vorkommt. Die Erweiterung und Synchronisation der Datenstruktur mit den IO-Tupeln erfolgt so, wie dies bereits für die Token der Tokenliste beschrieben wurde: wird ein IO-Tupel zum ersten Mal erkannt, wird die Datenstruktur um ein neues IO-Tupel erweitert, andernfalls wird ein bestehendes IO-Tupel nur um Referenzen zu dem Input- und dem Output-Datensatz ergänzt, in dem das IO-Tupel enthalten ist.

Somit kann eine Synchronisation des erlernten Wissens zwischen den verschiedenen trainierten ML-Modellen bzw. Vorhersageprogrammen ermöglicht werden, ohne dass es erforderlich ist, die Gesamtheit an Trainingsdaten, die zum trainierende einzelnen Modelle verwendet wurden, zu poolen und sämtliche Modelle erneut auf diesen gepoolten Datensatz zu trainieren.

Der hohe Kompressionsgrad des Modells erlaubt es, das Modell z.B. zum Zwecke der Synchronisation mit anderen Modellen sehr schnell über ein Netzwerk zu übertragen. Da der Versand von Daten über ein Netzwerk auch eine hohe Beanspruchung des Prozessors bewirkt (die Daten müssen für den Versand aufbereitet werden, beim Empfang erfolgt eine Prüfung auf Korrektheit und Vollständigkeit, etc.) impliziert eine Verringerung der Modellgröße auch eine erhebliche Entlastung des bzw. der Prozessoren der Datenverarbeitungsgeräte, auf welchem das bzw. die Vorhersageprogramme instanziiert sind und welche die Synchronisation durchführen.

Die Verwendung von Vorhersageprogrammen, die jeweils ein ML-Modell mit der bestimmten Datenstruktur beinhalten, ist vorteilhaft, da in den Modellen in generischer Weise Korrelationen von Input- und Outputtoken gespeichert werden auf eine Weise, dass die Modelle leicht erweitert und fusioniert/integriert werden können.

Während der Trainingsphase lernt das ML-Modell, die zu den Eingabedaten gehörenden Ausgabedaten auf Basis der Eingabedaten zu berechnen, also vorherzusagen. Das trainierte ML-Modell enthält Wissen um Tokenkorrelationen, welches es ermöglicht, verschiedene Vorhersagen auf Basis neuer Eingabedaten zu berechnen.

Ausführungsformen der Erfindung können zudem den Vorteil haben, dass das in dem Modell in Form der Tokenliste bzw. der IO-Tupel enthaltene Wissen nicht nur von Softwareprogrammen leicht exportiert, importiert und interpretiert werden kann, sondern auch für Menschen verständlich ist, also vom Menschen auch manuell Korrekturen, Löschungen und Ergänzungen am Modell vorgenommen werden können.

Beispielsweise kann das Vorhersageprogramm dazu konfiguriert sein, eine GUI zu erzeugen, die es einem Nutzer erlaubt, gezielt einzelne Token oder IO-Tupel und/oder die mit diesen verknüpft gespeicherten Referenzen zu ergänzen, zu löschen oder zu ändern. Beispielsweise kann es sich bei den Inputtoken um Wörter einer Ausgangssprache handeln, bei den Outputtoken um Wörter einer Zielsprache, und bei den IO Tupeln um Übersetzungen einzelner Wörter oder Wortgruppen (Ausrücke) von der Ausgangssprache in die Zielsprache. Der Nutzer kann einige ihm bekannte korrekte Übersetzungen in der Form von IO-Tupeln, Wortgruppen in der Ausgangssprache in der Form von I-Tupeln und/oder Wortgruppen in der Zielsprache (in der Form von O-Tupeln) manuell vorgeben und das Modell kann automatisch die zunächst manuell vorgegebene Liste an Tupeln erweitern.

Ausführungsformen der Erfindung können ferner den Vorteil haben, dass die oben genannte Datenstruktur verwendet werden kann, um Wissen über verschiedenste Zusammenhänge explizit und in einer synchronisiert baren Weise darzustellen. Beispielsweise kann eine Vielzahl von Datentypen wie zum Beispiel natürlichsprachlicher Textdaten, aber auch Bilddaten, Reihen von Messwerten, geographische Daten bzw. Daten mehrdimensionale Objekte als Sequenz von Dateneinheiten, sogenannter Token, repräsentiert werden. Jedem dieser Token kann hierbei eine Position innerhalb eines Bezugssystems zugewiesen werden. Beispielsweise kann es sich bei dem Token um ein Wort und bei der Position des Token um eine Position des Wortes innerhalb des Bezugssystems "Satz" handeln. Es kann sich bei dem Token aber auch um einen Messwert innerhalb einer Sequenz von Messwerten handeln, wobei die Position dieses Tokens die Position dieses Messwerts innerhalb der Messwertreihe ist. Das Bezugssystem innerhalb wessen die Tokenposition angegeben wird hängt also von der jeweiligen Aufgabenstellung bzw. den jeweils vorhandenen Trainingsdaten und Eingabedaten ab und kann, muss aber nicht identisch sein mit der Position des Tokens innerhalb der Tokensequenz. Beispielsweise kann es sich bei der Tokensequenz um einen syntaktisch oder semantisch zusammenhängenden Ausdruck handeln, z.B. "hat gebaut" oder "ist gelaufen" wohingegen die Tokenpositionen der einzelnen Token "hat" und "gebaut" bzw. "ist" und "gelaufen" sich nicht auf den jeweiligen Ausdruck bezieht sondern auf einen kompletten Satz, dem dieser Ausdruck entnommen wurde.

Der Anmelder hat beobachtet, dass sich eine Vielzahl unterschiedlicher Vorhersageprobleme bzw. das Wissen über eine Vielzahl von unterschiedlichen Zusammenhängen verschiedenster Parameter letztlich in der Form von IO-Tupeln in Kombination mit der redundanzfreien Tokenliste und optional auch I-Tupeln und O-Tupeln darstellen lassen. Ausführungsformen sind somit auf jegliches Problem anwendbar, welches als das Erlernen einer Korrelation von Inputtoken und Outputtoken, die jeweils als Bestandteil eines Paares eines verknüpften Inputdatensatzes und Outputdatensatzes bereitgestellt werden, darstellbar ist.

Gemäß Ausführungsformen der Erfindung umfasst das Verfahren die Verwendung von Trainingsdaten zur Erzeugung der trainierten ML-Modelle, wobei die Trainingsdaten sensible Daten, insbesondere personenbezogene Daten beinhalten. Die verschiedenen ML-Modelle werden auf unterschiedlichen Datenverarbeitungssystemen trainiert, wobei die jeweils verwendeten Trainingsdaten lokal und in geschützter Form gespeichert sind auf eine Weise, dass sie nicht von ihrem jeweiligen Datenverarbeitungssystem auf ein anderes übertragen werden können.

In diesem Kontext können Ausführungsformen der Erfindung den Vorteil haben, dass es nicht notwendig ist, lokal gespeicherte und gegebenenfalls sensible Trainingsdaten auf andere Systeme zu übertragen. Lediglich die während des Trainingsvorgangs erlernten Modelle werden im Zuge der Synchronisation ausgetauscht. Aus diesen lassen sich aber die Rohdaten allenfalls mit einigem Aufwand über die Referenzen und Positionen rekonstruieren, sodass ein unberechtigter Dritter den in den Rohdaten enthaltenen Informationsgehalt nur mit einigem Aufwand aus der Tokenliste rekonstruieren kann. Dies erhöht die Datensicherheit.

Beispielsweise kann es sich bei den Trainingsdaten um natürlichsprachliche Texte in deutscher Sprache sowie diesem zugeordnete, manuell erstellte und damit hochwertige englischsprachige Übersetzungstexte handeln. Die Texte enthalten teilweise personenbezogene Daten und sind auf eine Weise gespeichert, dass sie nicht auf andere Datenverarbeitungssysteme übertragen werden können. Beispielsweise kann jedes Datenverarbeitungssystem eine Netzwerkschnittstelle mit einem Filter beinhalten, der automatisch erkennt, ob einer der Texte oder dessen Übersetzung über das Netzwerk übertragen werden soll und in diesem Fall die Übertragung unterbindet. Außerdem kann das Datenverarbeitungssystem frei sein von sonstigen Schnittstellen zur Datenübertragung, insbesondere von USB-Schnittstellen zur Speicherung von Daten auf einem USB Speicher. Im Zuge des Trainings lernt das ML-Modell, welche Sequenzen von deutschen Wörtern welchen Sequenzen entsprechender englischer Wörter zugeordnet werden müssen, wobei die in den Texten enthaltenen personenbezogenen Daten aus der Tokenliste nicht mehr unmittelbar ersichtlich ist.

Nach Ausführungsformen der Erfindung sind die IO-Tupel gespeichert als zwei einander zugewiesene Konkatenate. Das erste Konkatenat ist eine konkatenierte Sequenz aller Inputtoken des IO-Tupels und das zweite Konkatenat ist eine konkatenierte Sequenz aller Outputtoken des IO-Tupels.

Beispielsweise kann die Zuweisung in Form einer Tabelle gespeichert werden oder in Form eines Gesamtkonkatenats das aus einer Konkatenation des ersten und des zweiten Konkatenats besteht, wobei das Gesamtkonkatenat (IO-Konkatenat) in einer nicht-redundanten Liste gespeichert werden kann, sodass jedem IO-Tupel genau ein Eintrag in der Gesamtkonkatenatsliste ("IO-Tupelliste") entspricht. Jedem Eintrag sind Referenzen auf ein- oder mehrere Inputdatensätze und ein oder mehrere Outputdatensätze gespeichert, die jeweils die Inputtoken bzw. Outputtoken des IO-Tupels enthalten.

Gemäß Ausführungsformen der Erfindung wird die Zuordnung innerhalb jedes dieser Paare im Zuge des Trainings des jeweiligen ML-Modells gelernt.

Dies kann vorteilhaft sein, da somit auch die erkannten IO-Tupel in Form einer komprimierten, redundanzfreien und damit sehr leicht erweiterbaren Datenstruktur gespeichert sind, die leicht mit den entsprechenden IO-Tupeln, die von anderen Vorhersageprogrammen erstellt wurden, verbunden ("gemerged") werden können.

Nach Ausführungsformen ist die Tokenliste und/oder die IO-Tupelliste gemäß einer Ordnungsrelation sortiert. Die Ordnungsrelation kann z.B. eine alphabetische Ordnung sein. Dies kann den Vorteil haben, dass eine Suche in der Tokenliste für ein Suchtoken erheblich beschleunigt werden kann, da die Suche nach Erreichen der Position in der Liste, wo gemäß der Ordnungsrelation nicht mehr mit einem "Match" zu rechnen ist, abgebrochen werden kann.

Nach Ausführungsformen speichert das Vorhersageprogramm beim Training und/oder bei einer Verarbeitung von zu einem späteren Zeitpunkt bereitgestellten Eingabedaten die Gesamtheit der Inputtoken eines jeden der IO-Tupel in Form eines Inputtokens in der Tokenliste. Die Gesamtheit der Outputtoken eines jeden der IO-Tupel wird in Form eines Outputtoken in der Tokenliste gespeichert. Die Berechnung der Vorhersage umfasst: Prüfen, für jedes der in der Tokenliste enthaltenen Token, ob die Eingabe das Token enthält, wobei Token, die Bestandteil längerer und ebenfalls enthaltener Token sind, ignoriert werden; und Zurückgeben eines Outputdatensatzes, welcher Outputtoken enthält, die dem identifizierten Token in einem der IO-Tupel zugewiesen ist.

Falls also in einem Eingabedatensatz "Das Ethanol-Wasser-Gemisch wurde dem Tank zugegeben" sowohl die Token "Ethanol", "Wasser", als auch "Ethanol-Wasser-gemisch" erkannt werden, weil die Liste alle drei Wörter bzw. Wortkombinationen enthält, werden die beiden erstgenannten Token ignoriert weil das Token "Ethanol-Wassergemisch" länger ist und die beiden erstgenannten Token enthält. In der Regel sind längere Token besonders prädiktiv bezüglich der korrekten Outputtoken. Falls in der IO-Tupelliste ein Eintrag enthalten ist, der ein Inputtokenkonkatenat "Ethanol-Wassergemisch" enthält, wird das zugehörige Outputtokenkonkatenat (z.B. ethanol-water-mixture) ermittelt und zur Konstruktion des Outputdatensatzes verwendet.

Ein IO-Tupel würde dem ersten Konkatenat "Ethanol-Wassergemisch" das zweite Tupel "ethanol-water-mixture" zuweisen, z.B. in Form eines Gesamtkonkatenats "Ethanol-Wassergemisch#ethanol-water-mixture". Die Tokenliste und/oder die IO-Tupelliste kann z.B. auch mit regulären Ausdrücken durchsucht werden, sodass in der IO-Tupelliste gezielt nach bestimmten Inputtoken, Inputtokenkonkatenaten, Outputtoken und/oder Outputtokenkonkatenaten gesucht werden kann.

Ausführungsformen der Erfindung erlauben es also, sämtliche Wörter (Token) bzw. "Wortgruppen" ( manuell spezifizierte oder mittels ML-Techniken erlernte Wortgruppen (I-Tupel, O-Tupel und/oder IO-Tupel) dargestellt als auf Konkatenation beruhenden Token (I-Tupel oder O-Tupel) oder Tokenkonkatenat-Zuweisungen (IO-Token) gegen die Eingabe zu vergleichen. Der Vergleich dient der Feststellung, ob diese in den Eingabedaten vorkommen. Es wird z.B. mit den längsten (und ggf. häufigsten bei gegebener Länge) Token der Tokenliste begonnen und die Tokenliste wird ausgehend von diesem abgearbeitet bis nur noch Eingabetoken übrigbleiben, die nicht gefunden wurden. Die neu gefundenen Token werden in die Tokenliste verknüpft mit einer Referenz auf den Eingabedatensatz gespeichert.

Nach Ausführungsformen umfasst die Analyse der Referenzen auch eine Analyse der Positionen der Token innerhalb der Datensätze, in denen diese jeweils auftreten, wobei die Identifikation der Token, die zu IO-Tupeln gehören, die Positionen der Token berücksichtigt und/oder wobei die IO-Tupel Informationen über die Positionen der in dem IO-Tupel jeweils enthaltenen Token beinhalten.

Dies kann vorteilhaft sein, da die Tokenpositionen innerhalb ihrer jeweiligen Datensätze wertvolle Informationen darüber liefern können, ob die beiden Token zu einem zusammenhängenden Ausdruck bzw. einem zusammengehörenden physischen Phänomen gehören oder nicht.

Nach Ausführungsformen ist jedem der mehreren Vorhersageprogramme ein individueller Programminstanz-Wert zugewiesen. Dies kann z.B. eine Hardware-ID eines Geräts sein, auf dem das Vorhersageprogramm instanziiert ist, oder ein für das Vorhersageprogramm eindeutiger Identifikator. Jedes der Vorhersageprogramme ist dazu konfiguriert, jeden zum Training und/oder zur Vorhersage verwendeten Inputdatensatz, Outputdatensatz und in den Eingabedaten enthaltenen Datensatz eine Datensatz-ID zuzuweisen, der innerhalb aller der von einem einzelnen Vorhersageprogramm verarbeiteten Datensätze einzigartig ist. Jede Datensatz -ID beinhaltet den Programminstanz-Wert, sodass alle Datensatz-IDs global für alle Datensätze, die von den mehreren Vorhersageprogrammen verarbeitet werden, einzigartig sind, wobei die Referenzen der Input- und Outputtoken auf die Datensätze die Datensatz-IDs beinhalten.

Dies kann vorteilhaft sein, da beim Fusionieren der Modelle und der darin enthaltenen Tokenlisten samt Referenzen ausgeschlossen ist, dass von den jeweiligen unterschiedlichen Vorhersageprogrammen verschiedenen Inputdatensätzen die gleiche ID zugewiesen wurde und die Referenzen im Zuge der Modellsynchronisation inkonsistent werden.

Nach Ausführungsformen umfasst die Synchronisation der Modelle:
a) Fusionieren des Inhalts aller Modelle in einem integrierten Model, das die gleichen Datenstrukturen wie die einzelnen Modelle beinhaltet, wobei im integrierten Modell jedes Inputtoken, Outputtoken und Tokentupel nur einmal vorkommt unabhängig von deren Vorkommenshäufigkeit in den einzelnen Modellen, wobei jedes Token der integrierten Tokenliste, das in den Tokenlisten mehrerer Modelle vorkommt, mit der Gesamtheit der Datensatzreferenzen dieses Tokens in den mehreren Modellen verknüpft gespeichert ist; und Ersetzen des Inhalts der einzelnen Modelle durch den Inhalt des integrierten Modells, sodass alle Modelle in einen synchronisierten Zustand überführt werden; oder
b) Identifikation derjenigen Input-Token und Output-Token des Tokenliste sowie derjenigen IO-Tupel in jedem der Modelle, die noch nicht synchronisiert wurden; selektive Übertragung der noch-nicht-synchronisierten Modellbestandteile einschließlich deren Referenzen an die anderen Modelle; und Synchronisation der Modelle dadurch, dass jedes Modell diejenigen Elemente der von den anderen Modellen übertragenen Modellbestandteile, die es noch nicht selbst beinhaltet, integriert, wobei im integrierten Modell jedes Inputtoken, Outputtoken und Tokentupel nur einmal vorkommt unabhängig von deren Vorkommenshäufigkeit in den einzelnen Modellen, wobei jedes Token der integrierten Tokenliste, das in den Tokenlisten mehrerer Modelle vorkommt, mit der Gesamtheit der Datensatzreferenzen dieses Tokens in den mehreren Modellen verknüpft gespeichert ist.

Je nach Ausführungsform kann die Synchronisation also inkrementell oder nicht inkrementell erfolgen.

Nach manchen Ausführungsformen sind die Vorhersageprogramme auf verschiedenen Datenverarbeitungsgeräten instanziiert. Die Synchronisation umfasst:
- Export der Modelle durch die jeweiligen Vorhersageprogramme;
- Übertragung der exportierten Modelle über ein Netzwerk von den jeweiligen Datenverarbeitungsgeräten an ein zentrales Datenverarbeitungssystem;
- Erzeugung eines integrierten Modells durch das zentrale Datenverarbeitungssystem;
- Durchführung der Synchronisation der Modelle durch Übertragung;
- Import des integrierten Modells durch jedes der Vorhersageprogramme, um das bisher verwendete Modell durch das integrierte Modell zu ersetzen.

Dieser auf einem zentralen Modellintegrationsgerät beruhende Ansatz hat den Vorteil, dass die Modellintegration und der damit verbundene Rechenaufwand nur einmal an zentraler Stelle durchgeführt werden muss. Dieser Ansatz schont also CPU Kapazitäten der einzelnen Datenverarbeitungsgeräte und ist bei leistungsschwachen Geräten besonders vorteilhaft. Andererseits wird der Netzwerkverkehr erhöht, a alle ausgetauschten Modelldaten über den zentralen Knoten und von diesem an alle anderen Datenverarbeitungsgeräte mit einem Vorhersageprogramm geleitet werden.

Nach manchen Ausführungsformen sind die Vorhersageprogramme auf verschiedenen Datenverarbeitungsgeräten instanziiert. Die Synchronisation umfasst:
- Selektiver Export der noch-nicht-synchronisierten Modellbestandteile eines ersten Modells von einem ersten der Datenverarbeitungssysteme über ein Netzwerk an ein zweites der Datenverarbeitungssysteme, das ein zweites Vorhersageprogramm mit einem zweiten der Modelle verwendet; und Durchführung der Identifikation und Integration derjenigen der Elemente der exportierten Modellbestandteile, die noch nicht in dem zweiten Modell enthalten sind; und/oder
- Selektiver Export der noch-nicht-synchronisierten Modellbestandteile des zweiten Modells von einem zweiten der Datenverarbeitungssysteme über ein Netzwerk an ein erstes der Datenverarbeitungssysteme, das ein erstes Vorhersageprogramm mit einem ersten der Modelle verwendet; und Durchführung der Identifikation und Integration derjenigen der Elemente der exportierten Modellbestandteile, die noch nicht in dem ersten Modell enthalten sind.

Dies kann vorteilhaft sein, da ein weiteres, zentrales Gerät eigens zur Modellintegration nicht erforderlich ist. Außerdem wird die Menge an über ein Netzwerk ausgetauschten Daten reduziert, da Modellupdates von den Geräten bzw. Vorhersageprogrammen, wo das Update zunächst vorgenommen wurde, unmittelbar an die Empfänger-Geräte gesendet wir.

Je nach Ausführungsform kann die Synchronisation also über einen zentralen Knoten oder gemäß einer "Point-to-Point" Architektur erfolgen.

Gemäß Ausführungsformen der Erfindung wird die Synchronisation automatisch und wiederholt durchgeführt. Beispielsweise wird die Synchronisation in regelmäßigen Zeitabständen von mindestens einmal pro Woche oder mindestens einmal am Tag oder mindestens einmal in der Minute durchgeführt. Dies kann vorteilhaft sein, um eine Auseinanderentwicklung der Vorhersagemodelle durch Training auf lokal erfassten, unterschiedlichen Trainingsdaten über die Zeit zu verhindern.

Zusätzlich oder alternativ dazu werden die trainierten Modelle automatisch unter Verwendung zusätzlicher Trainingsdaten erneut trainiert. Dies kann vorteilhaft sein, da durch erneutes Trainieren auf einen inhaltlich erweiterten Trainingsdatensatz die Qualität des trainierten ML-Modells und damit die Qualität der Vorhersagen dieses Modells verbessert werden kann.

Beispielsweise kann die Synchronisation so implementiert werden, dass die Vorhersageprogramme eine Gruppe von Vorhersageprogrammen bilden, die automatisch jede Erweiterung ihres eigenen ML-Modells mit neuem Wissen, das zum Beispiel durch Neutrainieren des jeweiligen ML-Modells auf einem um neue Trainingsdaten erweiterten Trainingsdatensatz erhalten wird, jeweils an ein zentrales Programm, z.B. ein zentrales Vorhersageprogramm, weitergeben. Beispielsweise umfasst jedes der Vorhersageprogramme eine Kontaktadresse des zentralen Programms, eine Schnittstelle zum Export von neu gewonnenem Wissen zu diesem zentralen Programm und/oder eine Schnittstelle zum Import von neu gewonnenem Wissen von dem zentralen Programm. Jedes der Vorhersageprogramme ist dazu konfiguriert, dass im Zuge eines erneuten Trainings das ML-Modells gewonnene zusätzliche Wissen (in Form des kompletten gelernten Modells oder inkrementellen Modellergänzungen) automatisch an das zentrale Programm zu übermitteln. Die Übermittlung kann beispielsweise über eine Netzwerkverbindung erfolgen, zum Beispiel das Internet. Gemäß Ausführungsformen ist das zentrale Programm dazu ausgebildet, das von den mehreren Vorhersageprogrammen erhaltene Wissen in Form eines integrierten Modells zu speichern, es verfügt also über Programmroutinen zum Erkennen von Duplikationen innerhalb dieses zentralen integrierten Modells.

Das neue Wissen ist jeweils gespeichert in Form von einer nichtredundanten Tokenliste, den IO-Tupeln und optional auch I-Tupeln und O-Tupeln, wobei vorzugsweise die I-Tupel Sequenzen (Wortgruppen) von zwei oder mehr Inputtoken sin, die als Konkatenat und damit als ein neues, automatisch erkanntes Inputtoken in der nichtredundanten Tokenliste gespeichert wird.

Bei den über das Netzwerk ausgetauschten Modellen oder inkrementell ergänzten Modellteilen kann es sich zum Beispiel um eine tabellarische Datenstruktur oder um mehrere tabellarische Datenstrukturen handeln. Beispielsweise kann die nichtredundante Tokenliste in Form einer Tabelle bzw. ASCI-Textdatei gespeichert sein, in welcher eine erste Spalte die Token und in einer zweiten Spalte die den Token zugewiesenen Referenzen und Positionen gespeichert sind. Die IO-Tupel können z.B. in Form von Input-Outputtoken-Konkatenaten in einer ersten Spalte einer weiteren Datei gespeichert sein und die Referenzen auf die zugehörigen Input- und OutputDatensätze können in einer zweiten Spalte dieser weiteren Datei gespeichert sein. Auch andere Datenformate wie z.B. JSON oder XML sind möglich, aber auch Komma-separierte Dateien, und/oder Datenbanktabellen. Gemäß bevorzugten Ausführungsformen besitzt jedes der Vorhersageprogramme eine Schnittstelle, die es einem Nutzer ermöglicht, die Zuordnungsdatenstruktur zu lesen und/oder zu editieren.

Beim Import prüft die die Modellintegration durchführende Software, ob in dem bereits vorhandenen Modell ein importierter Datenwert (Inputtoken oder Outputtoken in einer importierten redundanzfreien Tokenliste, ein IO-Tupel repräsentierendes Input-Outputtoken Konkatenat) bereits vorhanden ist. Dies kann z.B. durch ein lineares Scannen der Listen des schon vorhandenen Modells mit dem neu importierten Datenwert erfolgen.

Nach Ausführungsformen der Erfindung umfasst die Synchronisation der Modelle eine Überführung der IO-Tupellisten der Modelle in eine gemeinsame, redundanzfreie IO-Tupelliste.

Nach Ausführungsformen der Erfindung ist das Vorhersageprogramm dazu konfiguriert, die Eingabedaten in Eingabedatensätze zu zerlegen und die Eingabedatensätze in Inputtoken zu zerlegen. Inputtoken, die noch nicht in der Tokenliste enthalten sind werden samt Referenz auf den Eingabedatensatz aus dem das Inputtoken stammt in die Tokenliste des Modells gespeichert. Inputtoken, die bereits in der Tokenliste enthalten sind, werden nicht ein weiteres mal ergänzt, sondern es wird nur die Menge an Datensatzreferenzen, die diesem Token zugewiesen sind, um eine Referenz (und vorzugsweise auch Tokenpositionen) auf den Eingabedatensatz ergänzt.

Beispielsweise kann Synchronisationsoption so implementiert werden, dass die Vorhersageprogramme eine Gruppe von Vorhersageprogrammen bilden, die automatisch jede Erweiterung ihres eigenen ML-Modells mit neuem Wissen, das zum Beispiel durch Neutrainieren des jeweiligen ML-Modells auf einem um neue Trainingsdaten erweiterten Trainingsdatensatz erhalten wird, an alle anderen Vorhersageprogramme dieser Gruppe weitergeben, sodass das neue Wissen in die ML-Modelle dieser anderen Vorhersageprogramme aufgenommen werden kann.

Beispielsweise umfasst jedes der Vorhersageprogramme ein Register mit einer Liste von Kontaktadressen alle anderen Vorhersageprogramme dieser Gruppe. Außerdem umfasst jedes Vorhersageprogramm eine Schnittstelle zum Export von neu gewonnenem Wissen zu dem im Register verzeichneten anderen Vorhersageprogrammen und/oder eine Schnittstelle zum Import von neu gewonnenem Wissen von jedem der anderen Vorhersageprogramme. Das neue Wissen ist jeweils gespeichert in Form von redundanzfreien Tokenliste und IO-Tupeln, die in den jeweiligen ML-Modellen gespeichert sind. Jedes der Vorhersageprogramme ist dazu konfiguriert, dass im Zuge eines erneuten Trainings das ML-Modells gewonnene zusätzliche Wissen automatisch an die anderen Vorhersageprogramme der Gruppe zu übermitteln. Die Übermittlung kann beispielsweise über eine Netzwerkverbindung erfolgen, zum Beispiel das Internet. Gemäß Ausführungsformen ist jedes der Vorhersageprogramme dazu ausgebildet, das importierte und das im Zuge eines Trainings erhaltene Wissen in Form einer nicht-redundanten IO-Tupelliste zu speichern, es verfügt also über Programmroutinen zum Erkennen von Duplikationen innerhalb der Tokenliste und/oder IO-Tupelliste.

Gemäß Ausführungsformen der Erfindung ist jedes der Vorhersageprogramme auf einem anderen Datenverarbeitungssystem (z.B. einem "Edgesystem") instanziiert.

Die Implementierung des Verfahrens gemäß Ausführungsformen der Erfindung auf einem verteilten System, das mehrere Datenverarbeitungssysteme, insbesondere mehrere Edgesysteme, umfasst, welche jeweils ein Vorhersageprogramm mit einem eigenen trainierten ML-Modell beinhalten, kann vorteilhaft sein, da in diesem Kontext häufig das Problem auftritt, das Daten lokal erhoben werden, aber bisher in der Regel an eine zentrale Instanz übermittelt werden mussten um sie für Maschinen an den Ansätze nutzbar zu machen. Edgesysteme haben oftmals nur eine geringe Rechenleistung und/oder eine geringe Netzwerkbandbreite. Ausführungsformen der Erfindung können es ermöglichen, die von einem Edgesystem lokal erhobenen Daten lokal im Kontext eines Trainingsprozesses zu nutzen, um ein trainiert das ML-Modell zu erzeugen. Insbesondere bei Edgesystemen, die über eigene Sensoren verfügen wie zum Beispiel Mikrofone zur Aufzeichnung von Sprachdaten, kann es vorteilhaft sein, auf Basis dieser Sprachdaten lokal ein ML-Modell zur Lösung eines bestimmten Vorhersageproblems zu trainieren. Bei Sprachdaten kann dieses Problem zum Beispiel in einer Umsetzung von akustischen Daten in Text und/oder in einer Übersetzung von einer Ausgangssprache in eine Zielsprache bestehen. Gemäß Ausführungsformen der Erfindung ist es nicht mehr nötig, die erfassten Rohdaten an eine zentrale Instanz zu übermitteln um diese als Trainingsdaten nutzbar zu machen. Vielmehr kann das Training dezentral, also lokal auf den einzelnen Edgesystemen durchgeführt werden. Dank der automatisierten Synchronisation können Ausführungsformen der Erfindung dennoch sicherstellen, dass sich die trainierten ML-Modelle der einzelnen Edgesysteme im Laufe der Zeit stark divergierend entwickeln. Angesichts des Umstands, dass die Trainingsdaten lokal erfasst werden und damit in der Regel sich von Edgesystem zu Edgesystem unterscheiden, ist so eine Entwicklung generell zu befürchten und unerwünscht: zum einen ist die Vorhersagequalität der Modelle schlechter als sie sein könnte, würde die Gesamtheit der von den Edgesystemen erfassten Daten beim Training berücksichtigt. Dem kann dadurch vorgebeugt werden, dass das im Zuge des Trainings erworbene Wissen der einzelnen ML-Modelle der verschiedenen Edgesysteme über die verschiedenen Edgesysteme synchronisiert wird. Somit profitiert jedes ML-Modell jedes der Edgesysteme von den erfassten Trainingsdaten und dem im Zuge des Trainings erworbenen Wissens aller anderen Edgesysteme.

Nach Ausführungsformen handelt es sich bei dem Datenverarbeitungssystem um ein Edgesystem, wobei es sich bei jedem der Edgesysteme um ein Mikrocontroller- und Mikroprozessor-basiertes Datenverarbeitungssystem handelt.

Nach Ausführungsformen der Erfindung beinhaltet jedes der Datenverarbeitungssysteme mindestens einen Sensor des gleichen Typs. Das Verfahren umfasst ferner, für jedes von zwei oder mehreren der Datenverarbeitungssysteme:
- Erfassen von Trainingsdaten durch den zumindest einen Sensor des Edgesystems, wobei sich die erfassten Trainingsdaten zumindest teilweise von den Trainingsdaten, die durch die anderen der Datenverarbeitungssysteme erfasst werden, unterscheiden;
- Erzeugen des trainierten Modells der Vorhersageprogramms des Datenverarbeitungssystems durch Trainieren eines untrainierten Modells auf den erfassten Trainingsdaten.

Gemäß Ausführungsformen der Erfindung beinhaltet jedes der Edgesysteme mindestens einen Sensor des gleichen Typs, zum Beispiel ein Mikrofon, eine Kamera, ein Thermometer, ein pH-Messgerät, einen GPS Sensor, etc. Das Verfahren beinhaltet ferner folgende Schritte, die von jedem der Edgesysteme ausgeführt werden: Erfassen von Trainingsdaten durch den zumindest einen Sensor des Edgesystems, wobei sich die erfassten Trainingsdaten zumindest teilweise von den Trainingsdaten, die durch die anderen der Edgesysteme erfasst werden, unterscheiden; und Erzeugen des trainierten Modells des Vorhersageprogramms des Edgesystems durch Trainieren eines untrainierten Modells auf den erfassten Trainingsdaten. Zusätzlich oder alternativ dazu kann das trainierten Modell dieses Edgesystems auch durch erneutes trainieren eines bereits trainierten Modells auf einen durch die erfassten Trainingsdaten erweiterten Trainingsdatensatzes erfolgen.

Dies kann vorteilhaft sein, da aufgrund der automatischen Synchronisation die ML-Modelle aller Edgesysteme von dem Lernerfolg aller anderen profitieren. Dass im Zuge des Trainings erworbene Wissen wird also vollautomatisch integriert.

Nach Ausführungsformen umfassen die die von den Sensoren erfassten Daten Textdaten, Bilddaten, Audiodaten und/oder Videodaten. Nach Ausführungsformen ist das Verfahren beispielsweise anwendbar zur Signalverarbeitung, wie etwa 1D-Audioerkennung, 2D- und 3D-Bildverarbeitung, oder ND-Dateninput von N Sensoren etc. Ferner ist das Verfahren beispielsweise anwendbar bei einer Analyse von Stream-Daten (Bitstream bzw. Bitstrom). Ein Bitstream, auch als Bitstrom bekannt, bezeichnet hier eine Folge von Bits, die einen Informationsfluss repräsentieren, d.h. ein serielles bzw. sequentielles Signal. Ein Bitstrom ist somit eine Sequenz von Bits von unbestimmter Länge in zeitlicher Abfolge. Ein Bitstrom stellt beispielsweise einen in logische Strukturen gegliedert Datenstromes dar, der sich in grundlegendere Kleinstrukturen wie Symbole fester Größe, d.h. Bits und Bytes, und weiter in Blöcke und Datenpakete unterschiedlicher Protokolle und Formate gliedern kann.

Nach Ausführungsformen der Erfindung sind zumindest die nichtredundante Tokenliste sowie die IO-Tupel sowie vorzugsweise auch I-Tupel und O-Tupel, die automatisch erkannt wurden und das in den Rohdaten enthaltene Wissen repräsentieren, Ergebnisse eines maschinellen Lernprozesses während des Trainingsprozesses. So kann beispielsweise die nichtredundante Liste noch ohne ML-Ansatz erstellt werden, denn für diese ist im Einfachsten Fall nur ein Tokenisierer und ein Redundanzfilter erforderlich. Um jedoch statistisch hinreichend stark korrelierende Inputtoken und Outputtoken zu erkennen und die IO-Tupel zu bilden, um hinreichend stark korrelierende Inputtoken zu erkennen und die I-Tupel zu bilden und/oder um hinreichend stark korrelierende Outputtoken zu erkennen und O-Tupel zu bilden werden vorzugsweise Verfahren des maschinellen Lernens eingesetzt, die die Auftretenshäufigkeiten und vorzugsweise weitere Informationen wie insbesondere absolute und relative Tokenpositionen, den Tokenkontext berücksichtigen. Beispielsweise sind neuronale Netze in der Lage, auf Basis der nicht redundanten Tokenliste und der darin enthaltenen Referenzen und Positionsinformationen Muster (Tokenfolgen bzw. Wortfolgen sowie Input-Output Abbildungsvorschriften) zu erkennen und in Form von I-Tupeln, IO-Tupeln und/oder O-Tupeln in dem Modell abzuspeichern.

Die automatisch erkannten I-Tupel werden vorzugsweise in Form einer Konkatenation als neues Inputtoken in der nicht-redundanten Tokenliste gespeichert.

Die automatisch erkannten O-Tupel werden vorzugsweise in Form einer Konkatenation als neues Outputtoken in der nicht-redundanten Tokenliste gespeichert.

Nach Ausführungsformen umfasst jedes der Modelle ferner I-Tupel, wobei I-Tupel Mengen mehrerer Input-Token sind. Das Training umfasst: Erzeugung der I-Tupel durch Analyse des Tokenliste, um Tupel von Input-Token zu erkennen, welche innerhalb jeweils eines Input-Datensatzes gemeinsam vorkommen (und deren Auftreten innerhalb des gleichen Datensatzes insbesondere mit einer Mindeststärke korreliert), und Speicherung der I-Tupel als Ergebnis des Lernens in das Modell.

Nach Ausführungsformen umfasst jedes der Modelle ferner O-Tupel, wobei O-Tupel Mengen mehrerer Output-Token sind. Das Training umfasst: Erzeugung der O-Tupel durch Analyse des Tokenliste, um Tupel von Output-Token zu erkennen, welche innerhalb jeweils eines Output-Datensatzes gemeinsam vorkommen (und deren Auftreten innerhalb des gleichen Datensatzes insbesondere mit einer Mindeststärke korreliert), und Speicherung der O-Tupel als Ergebnis des Lernens in das Modell.

Beispielsweise kann anhand eines Teils der Datensatzreferenzen der neu ermittelten Inputtoken bzw. Outputtoken spezifiziert werden bzw. erkennbar gemacht werden, dass es sich bei dem Token um ein aus Inputdatensätzen extrahierten Token (einzelnes im Zuge des Inputdatensatzparsens ermitteltes Wort oder mittels maschinellem Lernen und/oder statistischer Analyse ermittelten Inputtokenkonkatenat/I-Tupel), also ein Inputtoken, und/oder um ein Outputtoken handelt. Beispielsweise kann ein Wert an einer bestimmten Bitposition der Datensatzreferenzen angeben, ob ein bestimmter Datensatz, in dem ein Token vorkam, ein Inputdatensatz oder ein Outputdatensatz ist. Es ist also möglich, dass das gleiche Token einmal in einem Inputdatensatz vorkam und ein Inputtoken ist und/oder in einem Outputtoken vorkam und ein Outputtoken ist.

In manchen Ausführungsformen ist es auch möglich, dass die zu einem späteren Zeitpunkt durch maschinelles Lernen und/oder statistische Analyse ermittelten Tokenfolgen, die in ein Konkatenat transformiert werden, in eine eigene nichtredundante Inputtokenliste und eine nichtredundante Outputtokenliste gespeichert werden, die jeweils Bestandteil des Modells sind und bei der Synchronisation und Fusion mehrerer Modelle so behandelt werden wie dies für die nichtredundante Tokenliste, die beim Parsen der Trainingsdaten entsteht, bereits beschrieben wurde.

Nach Ausführungsformen der Erfindung umfasst das Verfahren ein Erzeugen der unterschiedlichen trainierten Modelle der Vorhersageprogramme durch Trainieren identischer Kopien des gleichen untrainierten Modells auf unterschiedlichen Trainingsdaten.

Beispielsweise können mehrere Edgesysteme dadurch initialisiert werden, dass auf ihnen ein ML-Programm mit einem untrainierten ML-Modell installiert wird. Im Laufe der Zeit erfasst jedes der Edgesysteme über ein oder mehrere Sensoren unterschiedliche Sätze an Daten, die jeweils lokal gespeichert und als Trainingsdaten für das Training des jeweiligen ML-Modells verwendet werden. Obwohl also das zunächst installierte und trainierte ML-Modell bei allen Edgesystemen identisch ist, werden sich diese Modelle nach dem Training aufgrund der Unterschiedlichkeit der Trainingsdaten unterscheiden. Werden diese Modelle jeweils von einer lokalen Instanz eines Vorhersageprogramms zur Berechnung eines Vorhersageproblems verwendet, können sich die Ergebnisse im Einzelnen unterscheiden.

Nach Ausführungsformen der Erfindung sind die IO-Tupel jedes der trainierten Modelle Ergebnisse eines maschinellen Lernprozesses während des Trainingsprozesses.

### Nach Ausführungsformen der Erfindung wird die Synchronisation automatisch und wiederholt durchgeführt

Nach Ausführungsformen der Erfindung werden die trainierten Modelle automatisch unter Verwendung zusätzlicher Trainingsdaten erneut trainiert.

Nach Ausführungsformen der Erfindung umfasst die Berechnung der Vorhersage eine Berechnung ausgewählt aus einer Gruppe umfassend:
- Vorhersage des Materialzustands, insbesondere des Materialversagens, auf Basis gemessener Schwingungsmesswerte eines Materials;
- Prüfung der Identität von Personen auf Basis von Bilddaten und/oder biometrischen Daten;
- Berechnung eines Audiosignals, das gesprochenen Text in einer natürlichsprachlichen Sprache kodiert, auf Basis eines natürlichsprachlichen Eingabetextes;
- Berechnung eines Übersetzungstextes einer natürlichsprachlichen Zielsprache auf Basis eines Eingabetextes in einer natürlichsprachlichen Ausgangssprache;
- Berechnung eines natürlichsprachlichen Textes auf Basis eines Audiosignals, das gesprochenen Text in einer natürlichsprachlichen Sprache kodiert.

Nach Ausführungsformen der Erfindung umfasst das Training jedes der Modelle:
- Ermittlung von I-Tupeln durch Analyse der Tokenliste, wobei I-Tupel jeweils aus ein oder mehreren Inputtoken bestehen, deren Auftreten innerhalb der Inputdatensätze mit zumindest einer Mindeststärke korreliert; und/oder
- Ermittlung von O-Tupeln durch Analyse der Tokenliste, wobei O-Tupel jeweils aus ein oder mehreren Outputtoken bestehen, deren Auftreten innerhalb der Outputdatensätze mit zumindest einer Mindeststärke korreliert;
- Speicherung der I-Tupel und/oder O-Tupel als Ergebnis des Lernens in das Modell.

Nach Ausführungsformen der Erfindung speichert das Vorhersageprogramm jedes ermittelte I-Tupel in Form eines Tokenkonkatenats in der nichtredundanten Tokenliste, sofern diese Liste das Tokenkonkatenat noch nicht enthält, wobei das Tokenkonkatenat verknüpft gespeichert wird mit Referenzen auf diejenigen der Inputdatensätze, die das I-Tupel, aus dem das Tokenkonkatenat gebildet ist, enthalten.

Zusätzlich oder alternativ dazu speichert das Vorhersageprogramm jedes ermittelte O-Tupel in Form eines Tokenkonkatenats in der nichtredundanten Tokenliste gespeichert wird, sofern diese Liste das Tokenkonkatenat noch nicht enthält, wobei das Tokenkonkatenat verknüpft gespeichert ist mit Referenzen auf diejenigen der Outputdatensätze, die die das O-Tupel, aus dem das Tokenkonkatenat gebildet ist, enthalten.

Nach Ausführungsformen umfassen die IO-Tupel jeweils ein oder mehrere Input-Token, die jeweils einen Zustand oder eine Zustandsänderung einer Komponente eines technischen Systems, insbesondere eines IT-Systems oder einer Produktionsstraße repräsentieren, und ein oder mehrere Output-Token, die jeweils einen Zustand des technischen Systems repräsentieren. Die Output-Token repräsentieren Systemzustände, die sich als kausale Folge der Zustände und/oder Zustandsänderung der Komponenten ergeben.

Zusätzlich oder alternativ dazu repräsentieren ein oder mehrere Input-Token jeweils ein Wort oder eine Wortfolge einer natürlichsprachlichen Ausgangssprache. Ein oder mehrere Outputtoken repräsentieren jeweils ein Wort oder eine Wortfolge einer Zielsprache repräsentieren, wobei die Output-Token Übersetzungen der Input-Token von der Ausgangssprache in die Zielsprache darstellen.

Nach Ausführungsformen der Erfindung umfasst das Verfahren eine Vorverarbeitung von Rohdaten, insbesondere Sensordaten, sodass diese nicht-redundant und vorzugsweise in der 6. Normalform vorliegen, und eine Verwendung der vorverarbeiteten Rohdaten als den Eingabedaten zur Berechnung der Vorhersage. Die Vorverarbeitung von Rohdaten wird gemäß Ausführungsformen sowohl für die Trainingsdaten zu Beginn des Trainings als auch für die Eingabedaten, auf deren Basis das trainierten Modell eine Vorhersage berechnen soll, durchgeführt. Insbesondere werden die Eingabedaten (zur Trainingszeit und zur Testzeit) so verarbeitet, dass die Token und ihre jeweiligen Tokenpositionen nichtredundante, vorzugsweise sortierte Tokenliste samt Referenzen auf die Ursprungs-Datensätze gespeichert und weiterverarbeitet werden.

Es können beispielsweise folgende Normalformen unterschieden werden: 1. Normalform (1NF), 2. Normalform (2NF), 3. Normalform (3NF), Boyce-Codd-Normalform (BCNF), 4. Normalform (4NF), 5. Normalform (5NF), 6. Normalform (6NF). Die Normalisierungskriterien nehmen dabei von Normalform zu Normalform zu und umfassen jeweils die Normalisierungskriterien der vorhergehenden Normalformen, d.h. 1NF ⊆ 2NF ⊆ 3NF ⊆ BCNF ⊆ 4NF ⊆ 5NF ⊆ 6NF.

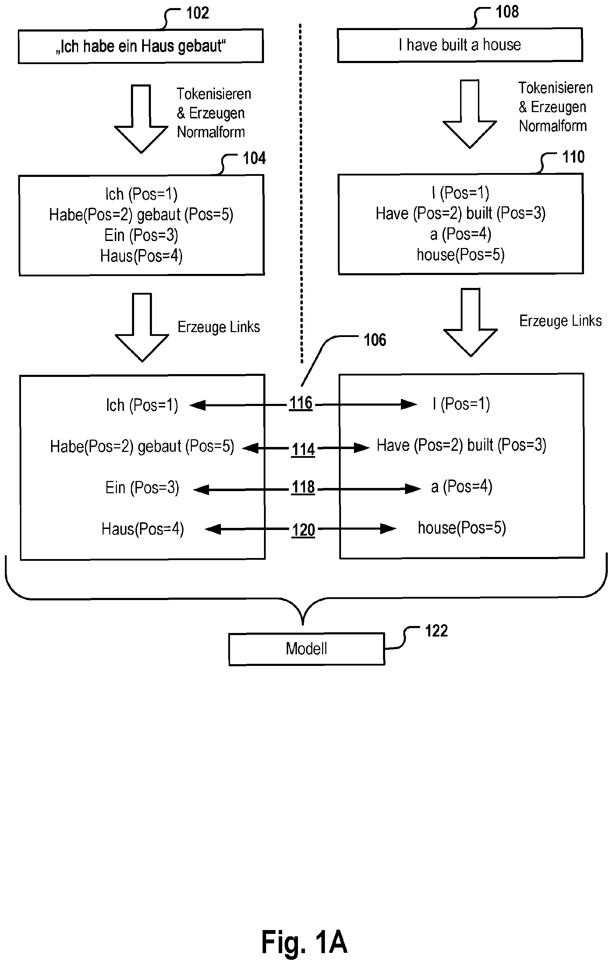

Eine Relation zwischen zwei Attributen (z.B. Token und Tokenpositionen, also z.B. zwischen einem Eingabetoken und einer Referenz samt Eingabetokenposition, zwischen einem Ausgabetoken und einer Ausgabetokenposition, zwischen einer Eingabetokensequenz und einer Ausgabetokesequenz wie z.B. in Figur 1A jeweils für Token einer Ausgangssprache und Token einer Zielsprache dargestellt) ist in der ersten Normalform, falls jedes Attribut der Relation einen atomaren Wertebereich besitzt und die Relation frei von Wiederholungsgruppen ist. Unter atomar wird hier ein Ausschluss von zusammengesetzten, mengenwertigen oder geschachtelten Wertebereichen für die Attributen, verstanden. Eine Freiheit von Wiederholungsgruppen erfordert es, dass Attribute, die gleiche bzw. gleichartige Information enthalten, in unterschiedliche Relationen ausgelagert werden.

Eine Relation ist in der zweiten Normalform, wenn sie die Anforderungen der ersten Normalform erfüllt und kein Nichtprimärattribut funktional von einer echten Teilmenge eines Schlüsselkandidaten abhängt. Ein Nichtprimärattribut ist ein Attribut, welches nicht Teil eines Schlüsselkandidaten ist. Das bedeutet, dass jedes Nichtprimärattribut jeweils von allen ganzen Schlüsseln abhängig und nicht nur von einem Teil eines Schlüssels. Relationen in der ersten Normalform, deren Schlüsselkandidaten nicht zusammengesetzt sind, sondern aus jeweils einem einzelnen Attribut bestehen, erfüllen mithin automatisch die zweite Normalform. Unter einem Schlüsselkandidaten wird hierbei eine minimale Menge von Attributen verstanden, welche die Tupel einer Relation eindeutig identifiziert.

Eine Relation ist in der dritten Normalform, wenn sie die Anforderungen der zweiten Normalform erfüllt und kein Nichtschlüsselattribut von einem Schlüsselkandidaten transitiv abhängt. Ein Attribut ist von einem Schlüsselkandidaten transitiv abhängig, wenn das entsprechende Attribut von dem entsprechenden Schlüsselkandidaten über ein weiteres Attribut abhängig ist.

Eine Relation ist in der Boyce-Codd-Normalform, wenn sie die Anforderungen der dritten Normalform erfüllt und jede Determinante ein Superschlüssel ist. Unter einer Determinante wird hier eine Attributmenge verstanden, von welcher andere Attribute funktional abhängen sind. Eine Determinante beschreibt somit die Abhängigkeit zwischen Attributen einer Relation und legt fest, welche Attributmengen den Wert der übrigen Attribute bestimmen. Ein Superschlüssel ist eine Menge von Attributen in einer Relation, welche die Tupel in dieser Relation eindeutig identifizieren. Mithin umfassen die Attribute dieser Menge bei paarweise ausgewählten Tupeln immer unterschiedliche Werte. Schlüsselkandidat ist mithin eine minimale Teilmenge der Attribute eines Superschlüssels, welche die Identifizierung der Tupel ermöglicht.

Eine Relation ist in der vierten Normalform, wenn sie die Anforderungen der Boyce-Codd-Normalform erfüllt und keine nichttrivialen mehrwertigen Abhängigkeiten umfasst.

Eine Relation ist in der fünften Normalform, wenn sie die Anforderungen der vierten Normalform erfüllt und keine mehrwertigen Abhängigkeiten umfasst, die voneinander abhängig sind. Die fünfte Normalform liegt somit vor, falls jeder nichttriviale Verbund-Abhängigkeit durch die Schlüsselkandidaten impliziert ist. Eine Verbund-Abhängigkeit ist durch die Schlüsselkandidaten der Ausgangsrelation impliziert, wenn jede Relation der Menge von Relationen ein Superschlüssel der Ausgangsrelation ist.

Eine Relation ist in der sechsten Normalform, wenn sie die Anforderungen der fünften Normalform erfüllt und keine nichttrivialen Verbund-Abhängigkeiten umfasst.

Eine Relation genügt einer Verbund-Abhängigkeit (join dependency) von einer Mehrzahl von Relationen, falls sich die Relation als Ausgangsrelation verlustlos in die entsprechende Menge von Relationen zerlegen lässt. Die Verbund-Abhängigkeit ist trivial, falls eine der Relationen der Menge von Relationen alle Attribute der Ausgangsrelation aufweist.

Ausführungsformen der Erfindung können den Vorteil haben, dass sehr unterschiedliche Typen von Trainingsdaten und während der Testzeit eingegebene Daten letztlich in einem redundanzfreien, generischen Format bereitgestellt werden, sodass eine Vielzahl prädiktiver Probleme bzw. ML-Trainingsszenarien dargestellt werden können als das Erlernen von Beziehungen (Zuordnungen von als Schlüssel-Wert Paaren bereitgestellten Trainings-Eingabedaten und von als Schlüssel-Wert-Paaren bereitgestellten Trainings-Ausgabedaten.

Die aus den Trainingsdaten gewonnenen Schlüssel-Wertpaare können z.B. in einer Datenbank, insbesondere einer No-SQL Datenbank wie z.B. Cortex DB gespeichert werden. Während des Trainings des ML-Modells werden Korrelationen der Eingabe-schlüssel mit Ausgabeschlüsseln und/oder der Eingabe-Schlüssel-Wertpaare mit Ausgabe-Schlüssel-Wert-Paare ermittelt und zwischen Paaren maximaler Korrelation wird eine Zuordnung erstellt. Die lokalen Normalformen und die Zuordnungen werden verknüpft miteinander gespeichert. Die Zuordnungen sind das Ergebnis eines Lernprozesses des ML-Modells während des Trainings.

In einem weiteren Aspekt betrifft die Erfindung ein System beinhaltend zumindest einen Prozessor und zumindest ein flüchtiges oder nicht-flüchtiges Speichermedium. Das Speichermedium beinhaltet Instruktionen, die bei Ausführung durch den zumindest einen Prozessor den Prozessor veranlassen, ein Verfahren zur Integration vom ML-Modellen gemäß hier beschriebener Ausführungsformen der Erfindung auszuführen.

Das Verfahren umfasst:
- Bereitstellen mehrerer Vorhersageprogramme, die jeweils zur Berechnung des gleichen Vorhersageproblems dienen und die jeweils dazu konfiguriert sind, eine Vorhersagen auf Basis eines Machine-Learning (ML)-Modells zu berechnen;
- Trainieren der Modelle der Vorhersageprogramme auf unterschiedlichen Trainingsdaten, wobei die Trainingsdaten jeweils eine Vielzahl von Input-Datensätzen und Output-Datensätzen, die jeweils einem der Input-Datensätze zugeordnet sind, umfassen, wobei jeder Inputdatensatz eine Sequenz von ein oder mehreren Inputtoken ist und jeder Outputdatensatz eine Sequenz von ein oder mehreren Outputtoken ist, wobei das Training jedes der Modelle umfasst:
   ▪ Erzeugung einer nichtredundanten Tokenliste aus den Inputtoken und Outputtoken, wobei jedes Token in der semantikfreien Tokenliste nur einmal vorkommt unabhängig davon, ob es ein Inputtoken und/oder ein Outputtoken repräsentiert, wobei jedes Token in der semantikfreien Liste verknüpft gespeichert ist mit Referenzen auf die jeweiligen Inputdatensätze und Outputdatensätze, die dieses Token beinhalten, sowie verknüpft gespeichert ist mit der Position des Tokens innerhalb des jeweiligen Input- oder Outputdatensatzes;
   ▪ Ermittlung von IO-Tupeln durch Analyse der Tokenliste, wobei IO-Tupel jeweils aus ein oder mehreren Inputtoken und ein oder mehreren Outputtoken bestehen, welche innerhalb einander zugeordneter Paare an Inputdatensätzen und Output-Datensätzen mit zumindest einer Mindeststärke korrelieren; und
   ▪ Speicherung des Tokenliste und der IO-Tupel als Ergebnis des Lernens in das Modell;
- Synchronisation der Modelle derart, dass jedes Modell nach der Synchronisation die gleiche Tokenliste und den gleichen Satz an IO-Tupeln beinhaltet;
- Eingabe von Eingabedaten in eines der Vorhersageprogramme; und
- Berechnung einer Vorhersage auf Basis der Eingabedaten durch das eine Vorhersageprogramm unter Verwendung des synchronisierten Modells dieses einen Vorhersageprogrammes.

Nach Ausführungsformen enthält das System mehrere Datenverarbeitungssysteme, wobei die mehreren Vorhersageprogramme und deren jeweilige Modelle auf unterschiedlichen der Datenverarbeitungssysteme instanziiert beziehungsweise gespeichert sind.

Nach Ausführungsformen werden die Modelle jeweils in einer Multi-Modell-Datenbank gespeichert.

Nach Ausführungsformen enthält das System ein zentrales Datenverarbeitungssystem, welches dazu ausgebildet ist, zumindest Teile der Modelle der Datenverarbeitungssysteme zu empfangen, in ein nicht-redundantes Modell zu integrieren und das integrierte Modell an die Datenverarbeitungssysteme zurückzuübertragen.

Zusätzlich oder alternativ dazu besitzen die Vorhersageprogramme jeweils Schnittstellen zum Austausch von zumindest Teilen ihrer Modelle mit jeweils anderen der Vorhersageprogramme über ein Netzwerk. Die Vorhersageprogramme sind dazu ausgebildet, von anderen Vorhersageprogramme erhaltene Teile von Modellen in das eigene Modell zu integrieren um eine Synchronisation der Modelle zu bewirken.

In einem weiteren Aspekt betrifft die Erfindung ein Verfahren bzw. System gemäß einer der folgenden Klauseln:
1. Computerimplementiertes Verfahren zur Integration verteilter Machine-Learning Modelle, wobei das Verfahren umfasst:
   - Bereitstellen (1402) mehrerer Vorhersageprogramme (406.1, 406.2, 406.3), die jeweils zur Berechnung des gleichen Vorhersageproblems dienen und die jeweils dazu konfiguriert sind, eine Vorhersagen auf Basis eines Machine-Learning (ML)-Modells (122.1, 122.2, 122.3) zu berechnen;
   - Trainieren (1404) der Modelle der Vorhersageprogramme auf unterschiedlichen Trainingsdaten, wobei die Trainingsdaten jeweils eine Vielzahl von InputDatensätzen und Output-Datensätzen, die jeweils einem der Input-Datensätze zugeordnet sind, umfassen, wobei jeder Inputdatensatz eine Sequenz von ein oder mehreren Inputtoken ist und jeder Outputdatensatz eine Sequenz von ein oder mehreren Outputtoken ist, wobei das Training jedes der Modelle umfasst:
      ∘ Erzeugung einer nichtredundanten Tokenliste aus den Inputtoken und Outputtoken, wobei jedes Token in der semantikfreien Tokenliste nur einmal vorkommt unabhängig davon, ob es ein Inputtoken und/oder ein Outputtoken repräsentiert, wobei jedes Token in der semantikfreien Liste verknüpft gespeichert ist mit Referenzen auf die jeweiligen Inputdatensätze und Outputdatensätze, die dieses Token beinhalten, sowie verknüpft gespeichert ist mit der Position des Tokens innerhalb des jeweiligen Inputoder Outputdatensatzes;
      ∘ Ermittlung von IO-Tupeln durch Analyse der Tokenliste, wobei IO-Tupel jeweils aus ein oder mehreren Inputtoken und ein oder mehreren Outputtoken bestehen, welche innerhalb einander zugeordneter Paare an Inputdatensätzen und Output-Datensätzen mit zumindest einer Mindeststärke korrelieren; und
      ∘ Speicherung des Tokenliste und der IO-Tupel als Ergebnis des Lernens in das Modell;
   - Synchronisation (1406) der Modelle derart, dass jedes Modell nach der Synchronisation die gleiche Tokenliste und den gleichen Satz an IO-Tupeln beinhaltet;
   - Eingabe (1408) von Eingabedaten in eines der Vorhersageprogramme; und
   - Berechnung (1410) einer Vorhersage auf Basis der Eingabedaten durch das eine Vorhersageprogramm unter Verwendung des synchronisierten Modells dieses einen Vorhersageprogrammes.
2. Computerimplementiertes Verfahren nach Klausel 1, wobei die IO-Tupel gespeichert sind als zwei einander zugewiesene Konkatenate, wobei das erste Konkatenat eine konkatenierte Sequenz aller Inputtoken des IO-Tupels ist und das zweite Konkatenat eine konkatenierte Sequenz aller Outputtoken des IO-Tupels.
3. Computerimplementiertes Verfahren nach einer der vorigen Klauseln, wobei die Gesamtheit der Inputtoken eines jeden der IO-Tupel in Form eines Inputtokens in der Tokenliste gespeichert wird, wobei die Gesamtheit der Outputtoken eines jeden der IO-Tupel in Form eines Outputtoken in der Tokenliste gespeichert wird, wobei die Berechnung (308) der Vorhersage umfasst:
   - für jedes der in der Tokenliste enthaltenen Token Prüfung, ob die Eingabe das Token enthält, wobei Token, die Bestandteil längerer und ebenfalls enthaltener Token sind, ignoriert werden;
   - Zurückgabe eines Outputdatensatzes, welcher Outputtoken enthält, die dem identifizierten Token in einem der IO-Tupel zugewiesen ist.
4. Computerimplementiertes Verfahren nach einer der vorigen Klauseln,
   - wobei das Verfahren ausgeführt wird auf einem Datenverarbeitungssystem mit einem Prozessor oder Microprozessor,
   - wobei der Prozessor oder Microprozessor optimiert ist für die Verarbeitung numerischer Werte und es sich bei den Referenzen um numerische Werte handelt; und/oder
   - wobei die Größe aller Referenzen identisch ist und der Verarbeitungsbreite des zumindest einen Prozessors oder Microprozessors entspricht.
5. Computerimplementiertes Verfahren nach einer der vorigen Klauseln, wobei jedem der mehreren Vorhersageprogramme ein individueller Programminstanz-Wert zugewiesen ist, wobei jedes der Vorhersageprogramme dazu konfiguriert ist, jeden zum Training und/oder zur Vorhersage verwendeten Inputdatensatz, Outputdatensatz und in den Eingabedaten enthaltenen Datensatz eine Datensatz-ID zuzuweisen, der innerhalb aller der von einem einzelnen Vorhersageprogramm verarbeiteten Datensätze einzigartig ist, wobei jede Datensatz -ID den Programminstanz-Wert beinhaltet, sodass alle Datensatz-IDs global für alle Datensätze, die von den mehreren Vorhersageprogrammen verarbeitet werden, einzigartig sind, wobei die Referenzen der Input- und Outputtoken auf die Datensätze die Datensatz-IDs beinhalten.
6. Computerimplementiertes Verfahren nach einer der vorigen Klauseln, wobei die Synchronisation der Modelle umfasst:
   a) Fusionieren des Inhalts aller Modelle in ein nicht-redundantes, integriertes Model, das die gleichen Datenstrukturen wie die einzelnen Modelle beinhaltet, wobei im integrierten Modell jedes Inputtoken, Outputtoken und Tokentupel nur einmal vorkommt unabhängig von deren Vorkommenshäufigkeit in den einzelnen Modellen, wobei jedes Token der integrierten Tokenliste, das in den Tokenlisten mehrerer Modelle vorkommt, mit der Gesamtheit der Datensatzreferenzen dieses Tokens in den mehreren Modellen verknüpft gespeichert ist; und Ersetzen des Inhalts der einzelnen Modelle durch den Inhalt des integrierten Modells, sodass alle Modelle in einen synchronisierten Zustand überführt werden; oder
   b) Identifikation derjenigen Input-Token und Output-Token des Tokenliste sowie derjenigen IO-Tupel in jedem der Modelle, die noch nicht synchronisiert wurden; selektive Übertragung der noch-nicht-synchronisierten Modellbestandteile einschließlich deren Referenzen an die anderen Modelle; und Synchronisation der Modelle dadurch, dass jedes Modell diejenigen Elemente der von den anderen Modellen übertragenen Modellbestandteile, die es noch nicht selbst beinhaltet, integriert, wobei im integrierten Modell jedes Inputtoken, Outputtoken und Tokentupel nur einmal vorkommt unabhängig von deren Vorkommenshäufigkeit in den einzelnen Modellen, wobei jedes Token der integrierten Tokenliste, das in den Tokenlisten mehrerer Modelle vorkommt, mit der Gesamtheit der Datensatzreferenzen dieses Tokens in den mehreren Modellen verknüpft gespeichert ist.
7. Computerimplementiertes Verfahren nach einer der vorigen Klauseln, wobei die Vorhersageprogramme auf verschiedenen Datenverarbeitungsgeräten instanziiert sind und wobei die Synchronisation umfasst:
   - Export der Modelle durch die jeweiligen Vorhersageprogramme;
   - Übertragung der exportierten Modelle über ein Netzwerk von den jeweiligen Datenverarbeitungsgeräten an ein zentrales Datenverarbeitungssystem;
   - Erzeugung eines integrierten Modells durch das zentrale Datenverarbeitungssystem;
   - Durchführung der Synchronisation der Modelle durch Übertragung von Kopien des integrierten Modells von dem zentralen Datenverarbeitungssystem über ein Netzwerk an die Vorhersageprogramme;
   - Import des integrierten Modells durch jedes der Vorhersageprogramme, um das bisher verwendete Modell durch das integrierte Modell zu ersetzen.
8. Computerimplementiertes Verfahren nach einer der vorigen Klauseln 1-7, wobei die Vorhersageprogramme auf verschiedenen Datenverarbeitungsgeräten instanziiert sind und die Synchronisation eines ersten und eines zweiten der Modelle umfasst:
   - Selektiver Export der noch-nicht-synchronisierten Modellbestandteile eines ersten Modells von einem ersten der Datenverarbeitungssysteme über ein Netzwerk an ein zweites der Datenverarbeitungssysteme, das ein zweites Vorhersageprogramm mit einem zweiten der Modelle verwendet; und Durchführung der Identifikation und Integration derjenigen der Elemente der exportierten Modellbestandteile, die noch nicht in dem zweiten Modell enthalten sind; und/oder
   - Selektiver Export der noch-nicht-synchronisierten Modellbestandteile des zweiten Modells von einem zweiten der Datenverarbeitungssysteme über ein Netzwerk an ein erstes der Datenverarbeitungssysteme, das ein erstes Vorhersageprogramm mit einem ersten der Modelle verwendet; und Durchführung der Identifikation und Integration derjenigen der Elemente der exportierten Modellbestandteile, die noch nicht in dem ersten Modell enthalten sind.
9. Computerimplementiertes Verfahren nach einer der vorigen Klauseln, wobei jedes der Vorhersageprogramme auf einem anderen Datenverarbeitungssystem (432.1, 432.2, 432.3) instanziiert ist, wobei es sich bei den Datenverarbeitungssystemen insbesondere um Mikrocontroller- oder Mikroprozessor-basiertes Datenverarbeitungssysteme handelt.
10. Computerimplementiertes Verfahren nach Klausel 9, wobei jedes der Datenverarbeitungssysteme mindestens einen Sensor des gleichen Typs beinhaltet, ferner umfassend, für jedes von zwei oder mehreren der Datenverarbeitungssysteme:
   - Erfassen von Trainingsdaten durch den zumindest einen Sensor des Datenverarbeitungssystems, wobei sich die erfassten Trainingsdaten zumindest teilweise von den Trainingsdaten, die durch die anderen der Datenverarbeitungssysteme erfasst werden, unterscheiden;
   - Erzeugen des trainierten Modells der Vorhersageprogramms des Datenverarbeitungssystems durch Trainieren eines untrainierten Modells auf den erfassten Trainingsdaten.
11. Computerimplementiertes Verfahren nach einer der vorigen Klauseln, wobei die IO-Tupel jedes der trainierten Modelle Ergebnisse eines maschinellen Lernprozesses während des Trainingsprozesses sind.
12. Computerimplementiertes Verfahren nach einer der vorigen Klauseln,
   - wobei die Synchronisation automatisch und wiederholt durchgeführt wird; und/oder
   - wobei die trainierten Modelle automatisch unter Verwendung zusätzlicher Trainingsdaten erneut trainiert werden.
13. Computerimplementiertes Verfahren nach einer der vorigen Klauseln, wobei jedes der Modelle ferner I-Tupel umfasst, wobei I-Tupel Mengen mehrerer Input-Token sind, wobei das Training umfasst:
   - Erzeugung der I-Tupel durch Analyse des Tokenliste, um Tupel von Input-Token zu erkennen, welche innerhalb jeweils eines Input-Datensatzes gemeinsam vorkommen; und
   - Speicherung der I-Tupel als Ergebnis des Lernens in das Modell.
14. Computerimplementiertes Verfahren nach einer der vorigen Klauseln, wobei die Berechnung der Vorhersage ausgewählt ist aus einer Gruppe umfassend:
   - Vorhersage des Materialzustands, insbesondere des Materialversagens, auf Basis gemessener Schwingungsmesswerte eines Materials;
   - Prüfung der Identität von Personen auf Basis von Bilddaten und/oder biometrischen Daten;
   - Berechnung eines Audiosignals, das gesprochenen Text in einer natürlichsprachlichen Sprache kodiert, auf Basis eines natürlichsprachlichen Eingabetextes;
   - Berechnung eines Übersetzungstextes einer natürlichsprachlichen Zielsprache auf Basis eines Eingabetextes in einer natürlichsprachlichen Ausgangssprache;
   - Berechnung eines natürlichsprachlichen Textes auf Basis eines Audiosignals, das gesprochenen Text in einer natürlichsprachlichen Sprache kodiert.
15. Computerimplementiertes Verfahren nach einer der vorigen Klauseln, wobei das Training jedes der Modelle umfasst:
   - Ermittlung von I-Tupeln durch Analyse der Tokenliste, wobei I-Tupel jeweils aus ein oder mehreren Inputtoken bestehen, deren Auftreten innerhalb der Inputdatensätze mit zumindest einer Mindeststärke korreliert; und/oder
   - Ermittlung von O-Tupeln durch Analyse der Tokenliste, wobei O-Tupel jeweils aus ein oder mehreren Outputtoken bestehen, deren Auftreten innerhalb der Outputdatensätze mit zumindest einer Mindeststärke korreliert;
   - Speicherung der I-Tupel und/oder O-Tupel als Ergebnis des Lernens in das Modell.
16. Computerimplementiertes Verfahren nach Klausel 15,
   - wobei jedes ermittelte I-Tupel in Form eines Tokenkonkatenats in der nichtredundanten Tokenliste gespeichert wird, sofern diese Liste das Tokenkonkatenat noch nicht enthält, wobei das Tokenkonkatenat verknüpft gespeichert ist mit Referenzen auf diejenigen der Inputdatensätze, die das I-Tupel, aus dem das Tokenkonkatenat gebildet ist, enthalten; und/oder
   - wobei jedes ermittelte O-Tupel in Form eines Tokenkonkatenats in der nichtredundanten Tokenliste gespeichert wird, sofern diese Liste das Tokenkonkatenat noch nicht enthält, wobei das Tokenkonkatenat verknüpft gespeichert ist mit Referenzen auf diejenigen der Outputdatensätze, die das O-Tupel, aus dem das Tokenkonkatenat gebildet ist, enthalten.
17. Computerimplementiertes Verfahren nach einer der vorigen Klauseln, wobei die IO-Tupel jeweils umfassen:
   - ein oder mehrere Input-Token, die jeweils einen Zustand oder eine Zustandsänderung einer Komponente eines technischen Systems, insbesondere eines IT-Systems oder einer Produktionsstraße repräsentieren, und ein oder mehrere Output-Token, die jeweils einen Zustand des technischen Systems repräsentieren, wobei die Output-Token Systemzustände darstellen, die sich als kausale Folge der Zustände und/oder Zustandsänderung der Komponenten ergibt; und/oder
   - ein oder mehrere Input-Token, die jeweils ein Wort einer natürlichsprachlichen Ausgangssprache repräsentieren, und ein oder mehrere Output-Token, die jeweils ein Wort einer Zielsprache repräsentieren, wobei die Output-Token Übersetzungen der Input-Token von der Ausgangssprache in die Zielsprache darstellen.
18. System (430) beinhaltend:
   - zumindest einen Prozessor (434.1, 434.2, 434.3);
   - zumindest ein Speichermedium mit Instruktionen, die bei Ausführung durch den zumindest einen Prozessor, den Prozessor veranlassen zur:
      ∘ Bereitstellen (1402) mehrerer Vorhersageprogramme (436.1, 436.2, 436.3), die jeweils zur Berechnung des gleichen Vorhersageproblems dienen und die jeweils dazu konfiguriert sind, eine Vorhersagen auf Basis eines Machine-Learning (ML)-Modells (122.1, 122.2, 122.3) zu berechnen;
      ∘ Trainieren (1404) der Modelle der Vorhersageprogramme auf unterschiedlichen Trainingsdaten, wobei die Trainingsdaten jeweils eine Vielzahl von Input-Datensätzen und Output-Datensätzen, die jeweils einem der Input-Datensätze zugeordnet sind, umfassen, wobei jeder Inputdatensatz eine Sequenz von ein oder mehreren Inputtoken ist und jeder Outputdatensatz eine Sequenz von ein oder mehreren Outputtoken ist, wobei das Training jedes der Modelle umfasst:
         ▪ Erzeugung einer nichtredundanten Tokenliste aus den Inputtoken und Outputtoken, wobei jedes Token in der semantikfreien Tokenliste nur einmal vorkommt unabhängig davon, ob es ein Inputtoken und/oder ein Outputtoken repräsentiert, wobei jedes Token in der semantikfreien Liste verknüpft gespeichert ist mit Referenzen auf die jeweiligen Inputdatensätze und Outputdatensätze, die dieses Token beinhalten, sowie verknüpft gespeichert ist mit der Position des Tokens innerhalb des jeweiligen Input- oder Outputdatensatzes;
         ▪ Ermittlung von IO-Tupeln durch Analyse der Tokenliste, wobei IO-Tupel jeweils aus ein oder mehreren Inputtoken und ein oder mehreren Outputtoken bestehen, welche innerhalb einander zugeordneter Paare an Inputdatensätzen und Output-Datensätzen mit zumindest einer Mindeststärke korrelieren; und
         ▪ Speicherung des Tokenliste und der IO-Tupel als Ergebnis des Lernens in das Modell;
      ∘ Synchronisation (1406) der Modelle derart, dass jedes Modell nach der Synchronisation die gleiche Tokenliste und den gleichen Satz an IO-Tupeln beinhaltet;
      ∘ Eingabe (1408) von Eingabedaten in eines der Vorhersageprogramme; und
      ∘ Berechnung (1410) einer Vorhersage auf Basis der Eingabedaten durch das eine Vorhersageprogramm unter Verwendung des synchronisierten Modells dieses einen Vorhersageprogrammes.
19. System nach Klausel 18, wobei das System mehrere Datenverarbeitungssysteme enthält und die mehreren Vorhersageprogramme und deren jeweilige Modelle auf unterschiedlichen der Datenverarbeitungssysteme instanziiert sind.
20. System nach Klausel 18 oder 19,
   - wobei das System ein zentrales Datenverarbeitungssystem enthält, welches dazu ausgebildet ist, zumindest Teile der Modelle der Datenverarbeitungssysteme zu empfangen, in ein nicht-redundantes Modell zu integrieren und das integrierte Modell an die Datenverarbeitungssysteme zurückzuübertragen; und/oder
   - wobei die Vorhersageprogramme jeweils Schnittstellen zum Austausch von zumindest Teilen ihrer Modelle mit jeweils anderen der Vorhersageprogramme über ein Netzwerk haben und die Vorhersageprogramme dazu ausgebildet sind, von anderen Vorhersageprogramme erhaltene Teile von Modellen in das eigene Modell zu integrieren um eine Synchronisation der Modelle zu bewirken.

Unter einer **"Multi-Modell-Datenbank"** wird hier eine Datenbank verstanden, welche dazu konfiguriert ist eine Mehrzahl von unterschiedlichen Datenmodellen zu unterstützen. Eine Multi-Modell-Datenbank ist also dazu konfiguriert Daten in mehr als einem Datenmodell zu speichern, zu indexieren und abzufragen. Datenmodelle sind beispielsweise relational, spaltenorientiert, dokumentenorientiert, graphbasiert, Key-Value-basiert etc. Ein Datenbankmodell legt fest, in welcher Struktur Daten in einem Datenbanksystem gespeichert werden, d.h. in welcher Form die Daten organisiert, gespeichert und bearbeitet werden.

Ein **"NoSQL"** (englisch für Not only SQL) DBMS ist ein DBMS, welches einem nichtrelationalen Ansatz der Datenspeicherung folgt und keine festgelegten Tabellenschemata benötigt. Zu den NoSQL DBMSs gehören insbesondere dokumentenorientierte DBMSs wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-DBMSs wie MySQL Cluster, Key-Value-Datenbanken wie Chordless, Google BigTable, GT.M, InterSystems Cache, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB.

Unter einer "**Datenbank"** wird im Folgenden eine (typischerweise große) Menge von Daten verstanden, die in einem Computersystem von einem Datenbankmanagementsystem (DBMS) nach bestimmten Kriterien verwaltet wird. Die Daten sind dabei in einer Vielzahl von Datensätzen organisiert. Unter einem Datenbankmanagementsystem oder DBMS wird im Folgenden ein elektronisches System zur Speicherung und Wiedergewinnung von Daten verstanden. Vorzugsweise werden die Daten in dem DBMS widerspruchsfrei und dauerhaft gespeichert und verschieden Anwendungsprogrammen und Nutzern in bedarfsgerechter Form effizient zur Verfügung gestellt. Ein DBMS kann typischerweise ein oder mehrere Datenbanken beinhalten und die darin enthaltenen Datensätze verwalten. Bei dem DBMS kann es sich vorzugsweise um ein feldorientiertes DBMS handeln, also um ein DBMS, das dazu konfiguriert ist, Teile einzelner Datensätze, sogenannte Feldwerte, in mehreren unterschiedlichen Feldern zu speichern.

Unter einem "**Datensatz"** wird im Folgenden eine dem Datenbanksystem bereitgestellte zusammenhängende Menge von Daten verstanden, welche von dem Datenbankmanagementsystem als zusammenhängende Menge von Daten verwaltet wird. Ein Datensatz umfasst beispielsweise eine Menge inhaltlich zusammenhängender Daten. Nach Ausführungsformen werden Datensätze jeweils als zusammenhängende Datenmengen in dem dokumentenorientierten Datenmodell gespeichert. Beispielsweise kann ein einzelner Datensatz ein bestimmtes physisches Objekt, z.B. eine natürliche Person oder eine Vorrichtung, repräsentieren. Bei der Person kann es sich z.B. um einen Angestellten, einen Patienten, einen Kunden, etc. handeln. Bei der Vorrichtung kann es sich beispielsweise um eine Produktionsvorrichtung, eine Computervorrichtung, ein Computer- oder Netzwerkelement oder eine Transportvorrichtung handeln.

Unter einem **"Feld"** wird im Folgenden ein Bereich auf einem logischen oder physikalischen Datenträger bezeichnet, der von einem DBMS verwaltet wird, der einem vordefinierten Feldtyp zugeordnet ist und der zur Speicherung eines Feldwertes eines Datensatzes angelegt und bestimmt ist. Ein Feld ist also ein Element zur Speicherung eines Feldwertes eines Datensatzes gemäß obiger Definition. Felder eines Datensatzes werden von einem DBMS gemeinsam verwaltet.

Unter einem **"Datenverarbeitungssystem",** auch als "Datenverarbeitungsgerät", "Computer" oder "Computersystem" bezeichnet, welches mittels programmierbarer Rechenvorschriften Daten verarbeitet. Unter einem Programm bzw. Programminstruktionen wird hier ohne Einschränkung jede Art von Computerprogramm verstanden, welches maschinenlesbare Instruktionen zur Steuerung einer Funktionalität eines Computers umfasst. Ein Datenverarbeitungssystem kann eine Kommunikationsschnittstelle zur Verbindung mit dem Netzwerk umfassen, wobei es sich bei dem Netzwerk um ein privates oder öffentliches Netzwerk handeln kann, insbesondere das Internet oder ein anderes Kommunikationsnetz. Je nach Ausführungsform kann diese Verbindung auch über ein Mobilfunknetz hergestellt werden. Bei einem Datenverarbeitungssystem kann es sich um ein stationäres Computersystem, wie beispielsweise einen Personalcomputer (PC) oder einen in einer Client-Server-Umgebung eingebundenen Client bzw. Server handeln. Ferner kann es sich bei einem Computersystem beispielsweise um ein mobiles Telekommunikationsgerät, insbesondere ein Smartphone, einen tragbaren Computer, wie zum Beispiel einen Laptop PC oder Palmtop-PC, ein Tablet PC, einen Personal Digital Assistant oder dergleichen handeln. Gemäß manchen Ausführungsformen handelt es sich bei dem Datenverarbeitungssystem um ein sog. Edgesystem.

Unter einem **"Speicher"** werden hier sowohl flüchtige als auch nicht flüchtige elektronische Speicher bzw. digitale Speichermedien zur Speicherung von Daten verstanden.

Unter einem **"nichtflüchtigen Speicher"** wird hier ein elektronischer Speicher zur dauerhaften Speicherung von Daten verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem **"flüchtigen Speicher"** wird hier ein elektronischer Speicher zur vorübergehenden Speicherung von Daten verstanden, welcher dadurch gekennzeichnet ist, dass alle Daten nach dem Abschalten der Energieversorgung verloren gehe. Insbesondere kann es sich hierbei um einen flüchtigen Direktzugriffsspeicher, der auch als Random-Access Memory (RAM) bezeichnet wird, oder einen flüchtigen Arbeitsspeicher des Prozessors handeln.

Unter einem **"Prozessor"** wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem Prozessor ein Mikroprozessor oder ein Mikroprozessorsystem aus mehreren Prozessorkernen und/oder mehreren Mikroprozessoren verstanden.

Unter einem **"Edgesystem"** wird hier ein Microcontroller- und Mikroprozessor-basiertes Datenverarbeitungssystem verstanden. Beispielsweise kann es sich bei dem Edgesystem um eine Vorrichtung, z.B. ein Gerät, insbesondere ein Messgerät, oder ein Geräteteil handeln, welches zumindest einen Microcontroller und mindestens einen Microprozessor beinhaltet.

Unter einem **"Mikroprozessor"** wird hier ein Prozessor verstanden, bei dem alle Bausteine des Prozessors auf einem Mikrochip vereinigt sind. Die Mikroprozessoren werden aufgrund ihrer unterschiedlichen Anwendungsbereiche an den jeweiligen Einsatzbereich angepasst. Beispielsweise müssen Spezialversionen für Luft- und Raumfahrt besonders hohen Temperaturen und Strahlungsexposition im laufenden Betrieb fehlerfrei standhalten, während Mobilprozessoren eine hohe IPC-Rate, geringe Leckströme und einen niedrigen Energieverbrauch aufweisen müssen. Diesen Bedürfnissen wird auf verschiedene Arten und Weisen Rechnung getragen, z.B. durch Auswahl eines bestimmten Befehlssatzes (CISC oder RISC). Gemäß Ausführungsformen kann es sich um einen CISC-basierten Mikroprozessor oder einen RISC-basierten Mikroprozessor handeln. Der jeweilige Mikroprozessor wird mit einem speziell auf diesen abgestimmten und typischerweise im Hinblick auf Ausführungseffizienz optimierten Mikrocode betrieben, wobei der Mikrocode optimal an Randbedingungen des Mikroprozessors wie Cachegrößen, Speicherbandbreite und -latenzen sowie die internen Funktionseinheiten angepasst wird.

Bei den Edgesystemen kann es sich z.B. um eine Vorrichtung mit einem oder mehreren Sensoren handeln. Die Vorrichtung kann z.B. ein Fahrzeug, eine Anlage, wie etwa eine Produktionsanlage, eine Verarbeitungsanlage, eine Förderanlage, eine Energiegewinnungsanlage, eine Wärmegewinnungsanlage, eine Steuerungsanlage, eine Überwachungsanlage, etc. sein.

Nach Ausführungsformen umfasst eines oder mehrere der Edgesysteme jeweils zumindest einen Sensor zum Erfassen von Zustandsdaten des Edgesystems. Die Zustandsdaten der Vorrichtung werden durch das Edgesystem von dem zumindest einen Sensor empfangen. Nach Ausführungsformen umfasst das Edgesystem eine Mehrzahl von Sensoren zum Erfassen von Zustandsdaten der Vorrichtung. Ausführungsformen können den Vorteil haben, dass die vorrichtungseigene Sensorik genutzt werden kann, um den Zustand der Vorrichtung zu erfassen. Der Zustand des Edgesystems kann beispielsweise beschrieben werden durch Angaben zu Kenngrößen des aktuellen Leistungsvermögens des Edgesystems, wie etwa Kilometerstand bei einem Fahrzeug, Verbrauchswerte, Leistungswerte, Fehlermeldungen, Ergebnisse vordefinierter Prüfprotokolle und/oder Kennungen von Komponenten des Edgesystems.

Unter einem **"Fahrzeug"** wird hier ein mobiles Verkehrsmittel verstanden. Ein solches Verkehrsmittel kann beispielsweise dem Transport von Gütern (Güterverkehr), von Werkzeugen (Maschinen oder Hilfsmittel) oder Personen (Personenverkehr) dienen. Fahrzeuge umfassen insbesondere auch motorisierte Verkehrsmittel. Bei einem Fahrzeug kann es sich beispielsweise um ein Landfahrzeug, ein Wasserfahrzeug und/oder ein Luftfahrzeug handeln. Ein Landfahrzeug kann beispielsweise sein: ein Automobil, wie etwa ein Personenkraftwagen, Omnibus oder ein Lastkraftwagen, ein motorbetriebenes Zweirad, wie etwa ein Motorrad, Kleinkraftrad, Motorroller oder Motorfahrrad, ein landwirtschaftlicher Traktor, Gabelstapler, Golfmobil, Autokran. Darüber hinaus kann es sich bei einem Landfahrzeug auch um ein Schienen gebundenes Fahrzeug handeln. Wasserfahrzeug kann beispielsweise sein: ein Schiff oder Boot. Ferner kann ein Luftfahrzeug beispielsweise sein: ein Flugzeug oder Hubschrauber. Unter einem Fahrzeug wird insbesondere auch ein Kraftfahrzeug verstanden. Kenngrößen des aktuellen Leistungsvermögens eines Fahrzeugs können zum Beispiel Drehzahl, Geschwindigkeit, Kraftstoffverbrauch, Abgaswerte, Getriebegang sein.

Unter einem **"Sensor"** wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Durchflussmenge, Schallfeldgrößen, Helligkeit, Beschleunigung, pH-Wert, Ionenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt. Ferner können Messdaten Zustände und/oder Zustandsänderung von elektronischen Geräten durch Außeneinflüsse und/oder in Folge einer Benutzung durch einen Nutzer wiedergeben.

Sensoren zum Erfassen von Zustandsdaten in einem Fahrzeug können beispielsweise umfassen: Kurbelwellensensor, Nockenwellensensor, Luftmassenmesser, Lufttemperatursensor, Kühlwassertemperatursensor, Drosselklappensensor, Klopfsensor, Getriebesensor, Wegstreckensensor, Getriebesensor, Niveausensor, Bremsverschleißsensor, Achslastsensor, Lenkwinkelsensor. Diese Sensoren erfassen und überwachen das Fahrverhalten des Fahrzeugs. Aus Abweichungen von Sollwerten und/oder einem Auftreten von bestimmten Mustern lassen sich Fehlfunktionen erkennen und identifizieren. Teils lassen sich auch konkrete Fehlerursachen, wie ausgefallene Komponenten des Fahrzeugs, identifizieren. Sensoren können zudem auch Kennungen elektronischer Komponenten, die in das Fahrzeug eingebaut sind abfragen, um deren Identität zu prüfen.

Unter einem **"Vorhersageprogramm"** wird hier eine Software verstanden, die auf Basis eines prädiktiven Modells eine Vorhersage berechnet. Bei der Vorhersage kann es sich z.B. um eine Lösung eines prädiktiven Problems handeln, insbesondere eines Klassifizierungsproblems oder eines Regressionsproblems. Beispielsweise kann die Vorhersage in der Berechnung/Vorhersage einer korrekten Übersetzung eines Textes in einer Ausgangssprache in eine Zielsprache bestehen.

Unter einem **"Machine-Learning (ML)-Modell"** wird hier ein von einem Computer verarbeitbares prädiktives Modell verstanden, welches statistische Zusammenhänge zwischen zwei oder mehr Objekten oder Ereignissen abbildet und welches dazu verwendet werden kann, eine Berechnung, insbesondere eine Vorhersage, durchzuführen. Die statistischen Zusammenhänge werden dem ML-Modell durch Trainieren auf Trainingsdaten unter Verwendung eines Machine-Learning-Algorithmus beigebracht.

Nach Ausführungsformen wird der Lernprozess des ML-Modells während des Trainings durch ein Lernmodul implementiert, also ein Softwareprogramm mit einem Algorithmus zum maschinellen Lernen, wobei das Lernmodul gemäß verschiedenen Ausführungsformen unterschiedliche Lernalgorithmen implementieren kann. Nach Ausführungsformen umfasst der Algorithmus zum maschinellen Lernen zumindest einen Algorithmus zum Erkennen statistisch signifikanter Korrelationen zwischen zwei oder mehr Werten, insbesondere zwischen Eingabetoken und Ausgabetoken und zwischen Eingabetokenpositionen und Ausgabetokenpositionen. Gemäß Ausführungsformen der Erfindung umfasst das Lernmodul einen speziell für das maschinelle Lernen entwickelten Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Nach Ausführungsformen ist das trainierte ML-Modell konfiguriert für eine Datenextraktion, Konsistenzprüfung, Bilderkennung, Spracherkennung, Sprachsteuerung, Sprache-zu-Text Umsetzung, Übersetzung, Vorrichtungsüberwachung und/oder autonome Vorrichtungssteuerung.

Unter einem **"Token"** wird hier eine im Kontext eines Datenverarbeitungsprozesses nicht weiter unterteilbare Dateneinheit verstanden. Die Dateneinheit kann z.B. durch einen Tokenisierungsprozess von Eingabedaten erzeugt worden sein. Diese Dateneinheit kann z.B. in einem einzelnen Wort bestehen, das durch Tokenisierung eines natürlichsprachlichen Textes erhalten wurde, oder um ein graphisches Muster, das durch Mustererkennung durch eine Bildanalysesoftware ermittelt wurde.

Unter einer "**Tokensequenz"** wird hier eine Reihe von mehreren Token verstanden, die aus einer Datenmenge extrahiert wurden und die syntaktisch und/oder semantisch zusammenhängen. Beispielsweise kann eine Tokensequenz aus einem aus mehreren Wörtern bestehenden Ausdruck bestehen wie "habe gebaut" oder "werde hinstellen", die aus einem natürlichsprachlichen Satz durch syntaktische und/oder semantische Analyse extrahiert wurden und die in ihrer Gesamtheit eine bestimmte Bedeutung codieren. Bei der Tokensequenz kann es sich auch um Sequenzen identischer oder ähnlicher graphischer Muster handeln, die durch Bildanalyse aus einem digitalen Bild extrahiert wurden. Automatisch erkannte Inputtokensequenzen werden als I-Tupel gespeichert, automatisch erkannte Outputtokensequenzen als O-Tupel.

Unter einer **"Eingabetokensequenz"** wird hier eine Tokensequenz verstanden, wobei die Eingabetokensequenz aus einem Datensatz extrahiert wurde, die zur Trainingszeit oder zur Testzeit (auch "Anwendungszeit" oder "Vorhersagezeit" genannt) des ML-Modells in das Modell eingegeben werden. Die zur Trainingszeit eingegebenen Eingabetokensequenzen sollen dem Modell ermöglichen, zu lernen, welche Aspekte der Eingabetokensequenzen mit bestimmten Ausgabetokensequenzen korrelieren. Die zur Testzeit eingegebenen Eingabetokensequenzen sollen dem Modell ermöglichen, auf deren Basis Ausgabetokensequenzen vorherzusagen.

Unter einer **"Ausgabetokensequenz"** wird hier eine Tokensequenz verstanden, die zur Trainingszeit des ML-Modells in das Modell eingegeben wird und die als korrekte Vorhersagewerte (Ausgaben bzw. Vorhersageergebnisse) gelten, die auf Basis der ebenfalls zur Trainingszeit eingegebenen Eingabedaten zu erwarten waren. Diese zur Trainingszeit eingegebenen Ausgabetokensequenzen sollen es dem Modell ermöglichen, zu lernen, welche Aspekte der Eingabedaten mit bestimmten Ausgabetokensequenzen korrelieren. Zur Testzeit werden keine Ausgabetokensequenzen in das Modell eingegeben, vielmehr werden die Ausgabetokensequenzen von dem Modell auf Basis der Eingabedaten berechnet und als Ergebnis ausgegeben.

Unter einer **"Tokenposition"** wird hier die Position eines Tokens innerhalb eines Bezugssystems verstanden. Bei der Tokenposition kann es sich insbesondere um einen numerischen Wert handeln, z.B. um einen numerischen Wert, der eine absolute Position des Tokens innerhalb eines Bezugssystems mit einer Basisposition angibt oder der eine relative Position des Tokens zu einem anderen Token innerhalb des Bezugssystems. Beispielsweise kann das Token ein Wort sein und das Bezugssystem der Satz, dem dieses Wort entnommen ist. Die absolute Tokenposition kann die Wortposition innerhalb des Satzes ausgehend vom als Basisposition angesehenen Satzanfangs (Position 0) darstellen. Die relative Tokenposition kann die Wortposition des Wortes relativ zu einem anderen Wort, das innerhalb des gleichen syntaktisch oder semantisch zusammenhängenden Ausdrucks und innerhalb dieses Satzes vorkommt, angeben.

Ein **"Tokenisierer"** ist eine Programlogik, die Daten, zum Beispiel Texte, Sätze oder Bilddaten, als Input erhält, die Daten analysiert, z.B. um Delimiter oder andere Zerlegungskriterien und Muster zu erkennen, und die Daten dann in ein oder mehrere Token als Ergebnis der Analyse zerlegt und die Token zurückgibt. Es ist auch möglich, dass nicht alle Daten als Token zurückgegeben werden. Beispielsweise kann ein Volltextindizierer semantisch unbedeutende Stoppwörter erkennen und herausfiltern, sodass diese nicht indiziert werden. Alternativ werden alle Daten als zurückgegeben. Einen Datenwert zu "tokenisieren" bedeutet also, den Datenwert nach einem bestimmten Schema in mehrere Bestandteile zu zerteilen. Die Bestandteile stellen die Token dar. So können z.B. natürlichsprachliche Texte an vordefinierten Trennzeichen, z.B. Leerzeichen, Punkten oder Kommata, aufgeteilt werden, die so generierten Bestandteile (Wörter) werden als Token verwendet.

Im Weiteren werden Ausführungsformen der Erfindung mit Bezugnahme auf die Zeichnungen näher erläutert. Elemente der nachfolgenden Ausführungsformen, die einander entsprechen, werden mit denselben Bezugszeichen gekennzeichnet. Es zeigen:
- Fig. 1A: die Tokenisierung eines Input-Datensatzes und eines diesem zugeordneten Output-Datensatzes;
- Fig. 1B: eine Reihe von manuell oder automatisch erzeugten IO-Tupeln;
- Fig. 2: ein Blockdiagramm eines Computersystems zum Erzeugen und/oder Verwenden eines prädiktiven Modells;
- Fig. 3: eine Vielzahl von Input-Datensätzen sowie diesen jeweils zugewiesenen Output-Datensätzen unter Berücksichtigung einzelner Tokenpositionen;
- Fig. 4: eine graphische Repräsentation einer Tokenliste, die Inputtoken, Outputtoken, I-Tupel und O-Tupel vereint;
- Fig. 5: einen Prozess der automatischen Identifikation eines I-Tupels korrelierender Inputtoken;
- Fig. 6: einen Prozess der automatischen Identifikation eines IO-Tupels korrelierender und semantisch korrespondierender Input- und Output-Token;
- Fig. 7: eine graphische Repräsentation einer Tokenliste, die Inputtoken, Outputtoken, I-Tupel und O-Tupel vereint, wobei die Token als numerische Werte repräsentiert sind;
- Fig. 8: einen Prozess der automatischen Identifikation eines I-Tupels korrelierender Inputtoken unter Berücksichtigung von Tokenabständen;
- Fig. 9: einen Prozess der automatischen Identifikation eines IO-Tupels korrelierender und semantisch korrespondierender Input- und Output-Token unter Berücksichtigung von Tokenabständen;
- Fig. 10: ein Übersichtsbild der unterschiedlichen Nutzung von I-Tupeln und IO-Tupeln;
- Fig. 11: mehrere Tabellen, die den Prozess der Überführung eines Datensatzes in eine Tabelle in der 6. Normalform, die als Grundlage der Erzeugung einer Tokenliste dienen kann;
- Fig. 12: ein I-Tupel mit Platzhaltern und Boolschen Operatoren;
- Fig. 13: ein Flussdiagramm eines Verfahrens zur automatischen Erzeugung eines Modells;
- Figur 14: ein Flussdiagramm eines Verfahrens zur Integration mehrerer trainierter ML-Modelle gemäß einer Ausführungsform; und
- Figur 15: ein schematisches Blockdiagramm eines Systems zur Integration mehrerer trainierter ML-Modelle gemäß einer Ausführungsform.

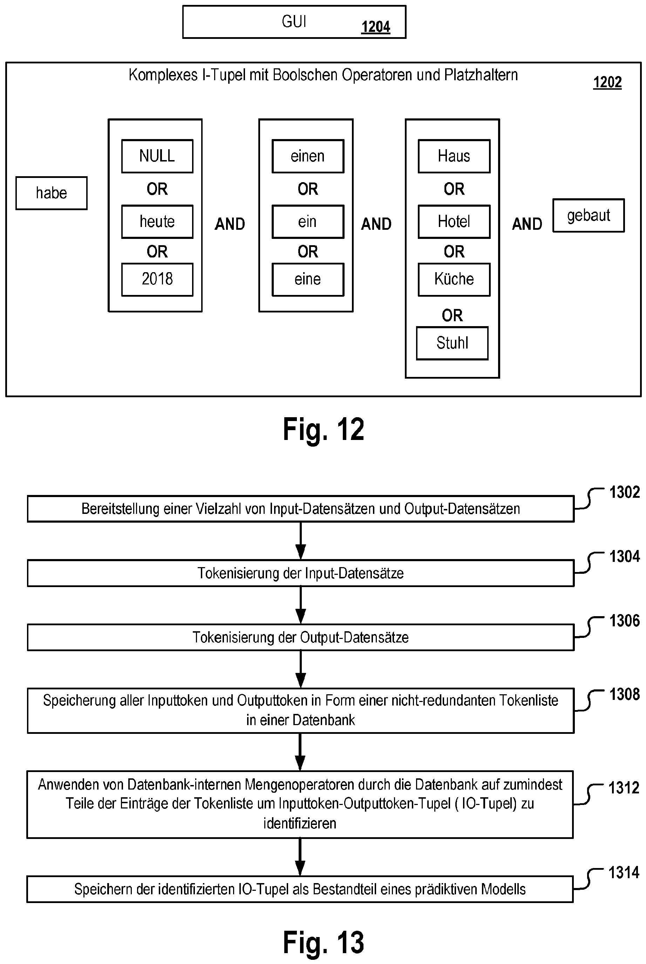

**Figur 1A** zeigt die Tokenisierung eines Input-Datensatzes und eines diesem zugeordneten Output-Datensatzes. Unter Verweis auf das Flussdiagramm von **Figur 13** beschrieben.

Zunächst wird in einem initialen Prozess das Modell 122 auf Basis einer Vielzahl von Input-Datensätzen und Output-Datensätzen, die jeweils einem der Input-Datensätze zugeiwesen sind, automatisch oder semi-automatisch erzeugt. Bei dem Modell handelt es sich in dem beschriebenen Beispiel um ein Übersetzungsprogramm von einer Ausgangssprache in eine Zielsprache. Die im Folgenden anhand des Übersetzungsbeispiel geschilderten Prinzipien, Schritte und Module können jedoch in analoger weise auch zur Erzeugung und Anwendung prädiktiver Modelle für andere Problemstellungen verwendet werden, z.B. zur Erkennung und Vorhersage von Zuständen (Ausfallszeitraum, Ausfallsgrund, etc.) technischer Systeme, z.B. verteilter Computersysteme oder Maschinen einer Fertigungsanlage, verwendet werden.

Zunächst erfolgt in Schritt 1302 eine Bereitstellung einer Vielzahl von Input-Datensätzen und Output-Datensätzen, wobei jeder der Output-Datensätze einem der InputDatensätze zugeordnet ist.

Bei den Input-Datensätzen handelt es sich zum Beispiel um natürlichsprachliche Sätze in deutscher Sprache. Der Input-Datensatz 102 besteht beispielsweise aus dem Satz "Ich habe ein Haus gebaut". Bei den Output-Datensätzen handelt es sich um natürlichsprachliche, englische Übersetzungen der als Input-Datensätze verwendeten deutschsprachigen Sätze. Der Output-Datensatz 108 besteht beispielsweise aus einer Übersetzung des Input-Datensatzes 102 und besagt: "I have built a house".

Im nächsten Schritt erfolgt eine Tokenisierung 1304 der Input-Datensätze, um für jeden der Input-Datensätze eine Liste 104 an Inputtoken samt deren Position innerhalb ihres jeweiligen Input-Datensatzes zu erhalten.

In analoger Weise wird in Schritt 1306 eine Tokenisierung der Output-Datensätze durchgeführt, um für jeden der Output-Datensätze eine Liste 110 an Outputtoken samt deren Position innerhalb ihres jeweiligen Output-Datensatzes zu erhalten. Der Schritt 1306 kann auch vor oder parallel zu dem Schritt 1304 durchgeführt werden.

In Schritt 1308 werden alle Inputtoken 104 und Outputtoken in Form einer nicht-redundanten Tokenliste in einer Datenbank gespeichert. Diese Liste ist so aufgebaut, dass Elemente dieser Liste jeweils einen der Input- oder Output-Token repräsentieren und dass die Elemente jeweils Zeiger auf alle Input- oder Output- Datensätze, die das von diesem Element repräsentierte Token enthalten, sowie die Position dieses Tokens innerhalb des jeweiligen Datensatzes, enthalten.

In manchen Ausführungsformen sind die Token mit Metadaten, z.B. innerhalb von Zusatzfeldern gespeicherter Marker, verknüpft gespeichert. Die Metadaten zeigen an, ob es sich bei dem Token um ein Inputtoken (z.B. deutsches Wort) oder um ein Outputtoken (z.B. englischsprachiges Wort) handelt. In andere Ausführungsformen ist diese Information in der Datensatz-ID und der Referenz auf den Datensatz kodiert.

In Schritt 1312 werden datenbank-interne Mengenoperationen durch die Datenbank auf die Zeiger der Tokenliste angewandt, um IO-Tupel zu identifizieren, die mindestens ein Inputtoken und mindestens ein Outputtoken beinhalten. Die Mengenoperationen sind so spezifiziert, dass die IO-Tupel Inputtoken und Outputtoken miteinander in einem Tupel vereinen, wenn diese in einander zugeordneten Input-Datensätzen und Output-Datensätzen korreliert auftreten. Beispielsweise können hierfür INTERSECT Operationen auf den Zeiger in der "Vorkommensliste" der einzelnen Inputtoken und Outputtoken ausgeführt werden.

Die einander zugeordnete Input-Datensätze und Output-Datensätze haben vorzugsweise einen gemeinsamen Datensatz-Identifikator oder sind einander eineindeutig zugewiesen, z.B. in einer Mappingtabelle mit Inputdatensatz-IDs und zugewiesenen Outputdatensatz-IDs. Durch Verwendung identischer Datensatz-IDs für Inputdatensätze und Outputdatensätze oder die Verwendung von Mappingtabellen kann eine INTERSECT Operation eine gültige Schnittmenge zurückliefern. Ausführungsformen stellen daher sicher, z.B. durch die Verwendung von gemeinsamen Identifikatoren für einander zugeordnete Input- und Output-Datensätze, die ggf. zusätzlich zu automatisch erzeugten primären Schlüsseln der jeweiligen Input-Datensätze und Output-Datensätzen erzeugt werden, dass die INTERSECT Operationen eine Liste an Zeigers (die z.B. als Satz-IDs fungieren) zurückgeben, in welchen sowohl das Input-Token als auch das Output-Token vorkommen.

In dem hier gezeigten Beispiel könnte z.B. eine Korrelationsanalyse einer Vielzahl von Inputtoken und Outputtoken innerhalb einander zugewiesener Input- und Output-Datensätze ergeben, dass das Input-Token "Ich" mit dem Output-Token "I" stärker als mit allen anderen Output-Token in der Tokenliste korreliert und ein IO-Tupel 116 erzeugen. Die Korrelationsanalyse kann z.B. darin bestehen, sämtliche kombinatorisch möglichen Kombinationen von einem Inputtoken und einem Outputtoken zu bilden und einen Korrelationsgrad dieser Zweierkombination durch INTERSECT Operationen zu berechnen. Dann wird für ein gegebenes Inputtoken - z.B. "Ich"-dasjenige Outputtoken ermittelt, das mit diesem am stärksten korreliert, und ein entsprechendes IO-Tupel 116 gebildet. In analoger Weise werden auch weitere IO-Tupel 118, 120 automatisch erkannt und als Ergebnis eines Lernprozesses in das Modell 122 gespeichert. Es ist optional auch möglich, dass zumindest einige der IO-Tupel vorab durch einen Nutzer definiert werden, z.B. um einen gewissen Grundwortschatz samt Übersetzung von Anfang an in das Modell einfließen zu lassen.

Außerdem ist es möglich, dass das Verfahren eine automatische oder von einem Nutzer bewirkte Spezifikation und Speicherung eines I-Tupels beinhaltet. Beispielsweise könnte durch Anwendung von INTERSECT Operationen auf Input-Token automatisch festgestellt werden, dass die Wörter "habe" und "gebaut" stark korrelieren. Infolgedessen wird das I-Tupel "habe-gebaut", das neben den Token auch Positionsinformationen beinhaltet, erzeugt und gespeichert. Alternativ dazu kann auch ein Nutzer ein solches I-Tupel manuell über eine GUI definieren.

Dieses I-Tupel wird im Folgenden so behandelt wie ein Input-Token: es wird eine Koinzidenzanalyse für die Token dieses I-Tupels "habe gebaut" mit allen in der Tokenliste enthaltenen Outputtoken vorgenommen. Die am stärksten korrelierenden Outputtoken, hier die Token "have" und "built" werden mit den Inputtoken des I-Tupels zu einem automatisch erkannten IO-Tupel 114 mit je 2 Inputtoken und 2 Outputtoken zusammengefasst.

Vorzugsweise werden sowohl bei der Erzeugung von I-Tupeln als auch bei der Erzeugung der IO-Tupel die Positionen der jeweiligen Tupel mitberücksichtigt. Beispielsweise werden die relativen Positionen (Abstände) aller Inputtoken eines I-Tupels oder IO-Tupels, die innerhalb des gleichen Input-Datensatzes vorkommen, erfasst und aggregiert. Beispielsweise wird ein gerundeter Mittelwert der Abstände gebildet. Dieser kann dazu genutzt werden, einen Maximalabstand oder einen Wertebereich für erlaubte Abstände bestimmter Token dieses Tupels zu definieren. Diese aus den aggregierten relativen Positionsangaben aggregierten Werte können mit dem jeweiligen I-Tupel oder IO-Tupel verknüpft gespeichert werden. Dies kann die Qualität des Modells verbessern. Es ist z.B. möglich, dass zwei bestimmte Inputtoken zwei unterschiedliche I-Tupel bilden, z.B. dann, wenn diese bezüglich ihrer Abstände zwei Cluster bilden. Das I-Tupel "habe-gebaut" kann zum Beispiel mit einem Abstand von 3 verknüpft gespeichert sein, wobei 3 der gemittelte gerundete Abstand dieser Token in den einschlägigen Input-Datensätzen ist. Es ist auch möglich, dass die über viele Datensätze aggregierten absoluten Tokenpositionen (hier: 2 und 5) gespeichert werden, sodass sich aus diesen dann der Abstand 3 ergibt. Es ist auch möglich, dass ein weiteres i-Tupel gespeichert wird, allerdings mit anderen Abständen. Sollte im Trainingsdatensatz sehr häufig Sätze der Struktur "Ich habe ein Haus gekauft und darin einen Kamin gebaut" vorkommen, könnte das weitere I-Tupel für "habe-gebaut" einen aggregierten relativen Abstand von ca. 7 haben.

In Schritt 1314 speichert die Lernsoftware das oder die identifizierten IO-Tupel als Bestandteil eines prädiktiven Modells, also z.B. in der Tokenliste, die als Bestandteil des prädiktiven Modells verwendet werden kann. Das prädiktive Modell ist dazu ausgebildet, in Antwort auf eine Eingabe eines neuen Input-Datensatzes, der zumindest ein Input-Token enthält, einen neuen Output-Datensatz zurückzugeben, wobei der zurückgegebene Output-Datensatz zumindest ein Outputtoken enthält, welches dasjenige der bereits in der Tokenliste gespeicherten Outputtoken ist, das gemäß den IO-Tupeln mit dem zumindest einen Inputtoken am stärksten korreliert auftritt.

Optional kann das Verfahren auch das automatische Erkennen oder das Empfangen und Speichern manuell definierter O-Tupeln beinhalten, also von Tupeln, die aus korrelierenden Outputtoken bestehen. Die Erkennung erfolgt analog wie für die Inputtoken bzw. I-Tupel beschrieben. Auch die O-Tupel können als Bestandteil des Modells gespeichert werden.

Somit wird auf die gleiche Weise sowohl wichtige syntaktische und/oder semantische Muster der Ausgangssprache, eine Übersetzung bzw. Abbildung einzelner Wörter oder einzelner erkannter Wortgruppen und Wortmuster in Wörter und Wortgruppen der Zielsprache und optional auch semantische oder syntaktische Muster der Zielsprache erkannt und gespeichert. Alle diese an sich unterschiedlichen rechnerischen Problemstellungen können mit den gleichen Datenstrukturen und den gleichen Rechenoperationen durchgeführt werden. Somit wird auf transparente und rechnerisch ressourcenschonende Weise ein starker und vielschichtiger Lerneffekt erzielt.

Im Effekt wird somit die Ausgangssprache gelernt, also wichtige Sprachmuster und Wörter der deutschen Sprache. Eine manuelle Definition einiger I-Tupel zu Beginn des Trainings kann den Vorgang unterstützen. Das Erlernen der Zielsprache einschließlich häufig in dieser verwendeten Wortgruppen (O-Tupel) erfolgt analog. Außerdem wird eine Transformationsfunktion in Form von IO-Tupeln automatisch gelernt. Die Transformationsfunktion ist eine Übersetzungsfunktion vom Deutschen ins Englische. Die Übersetzung besteht aus IO-Token ("Links") Links zwischen ein oder mehreren Token der verschiedenen Sprachen. Auch hier kann es hilfreich sein, einige IO-Token manuell am Anfang des Prozesses vorzugeben, also z.B. "Ich" auf "I" abzubilden und ein entsprechendes IO-Tupel zu definieren und zu speichern.

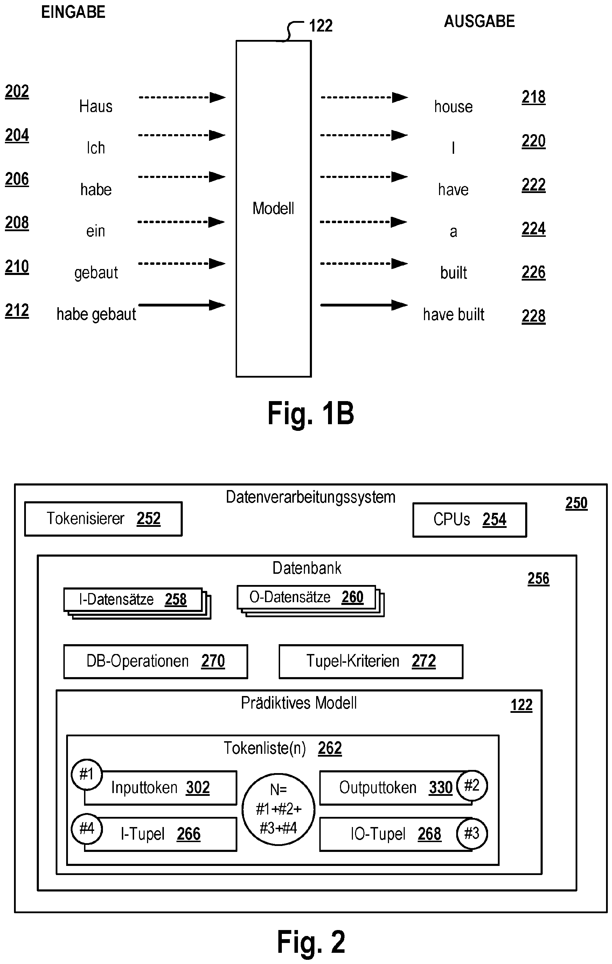

**Figur 1B** zeigt die Zuordnungen von Inputtoken 202-210 und I-Tupeln 212 zu Output-Token 218-226, die das Modell 122 während der Trainingsphase erlernt hat und optional teilweise als vordefinierte Zuordnungen erhalten hat. Die Zuordnungen können als IO-Tupel repräsentiert sein.

Nicht gefundene Übersetzungen oder Bedeutungen können durch manuelle Eingabe eines Nutzers über eine GUI ergänzt bzw. definiert werden. Der Benutzer kann die automatisch erstellten Modelle jederzeit manuell korrigieren, in dem er Linkstrukturen ändert.

**Figur 2** zeigt ein Blockdiagramm eines Computersystems 250 zum Erzeugen und/oder Verwenden eines prädiktiven Modells. Das System beinhaltet ein oder mehrere Prozessoren 254 sowie einen Datenspeicher mit einer Datenbank 256. Das System umfasst zudem eine oder mehrere Tokenisierer 252, die Bestandteil der Datenbank sein können (manche Datenbanken unterstützen z.B. Volltexttokenisierung) oder als datenbankexternes Programm ausgebildet sein können. In der Datenbank sind Trainingsdaten gespeichert, die zur initialen Erzeugung eines prädiktiven Modells 122 mittels eines datenbankbasierten Machine-Learning-Ansatzes verwendet wurden. Die Trainingsdaten umfassen Input-Datensätze 258 und OutputDatensätze 260, wobei jeder der Output-Datensätze einem der Input-Datensätze spezifisch zugeordnet ist. Der oder die Tokenisierer 252 tokenisiert jeden der InputDatensätze und der Output-Datensätze und speichert diese in eine Tokenliste 262.

In der Datenbank können optional verschiedene Kriterien 272, insbesondere bezüglich der Abstände von Token, definiert sein, die bei der automatischen Erkennung von I-Tupeln 266, IO-Tupeln 268 oder O-Tupeln verwendet werden können.

Im Zuge des Trainings lernt das Modell Korrelationen zwischen Inputtoken und Outputtoken, sowie optional Tokenmuster innerhalb der Input-Datensätze und/oder Output-Datensätze und dadurch in der Lage, neue Input-Datensätze in neue OutputDatensätze zu überführen.

Input- wie Output-Token werden in einer Tokenliste gespeichert. Jedes Token wird in einem eigenen Listenelement der Tokenliste gespeichert. Jedes Listenelement enthält zudem eine Vorkommensliste aus ein oder mehreren Zeigern zu dem Datensatz, von dem das Token stammt. Die Zeiger einer Vorkommensliste können in Form eines Arrays aus einem oder mehreren Feldern fixer Länge gespeichert sein. Vorzugsweise beinhaltet jedes Feld neben dieser Zeiger auch die Position des Tokens innerhalb des durch den Zeiger identifizierten Datensatzes. Die Tokenliste dient als Grundlage für die automatisierten Lernprozesse zur Erzeugung des Modells und beinhaltet die Ergebnisse des Lernprozesses in Form von automatisch ermittelten Token-Tupeln, insbesondere IO-Tupeln und/oder I-Tupeln. Nach Ausführungsformen sind in der Tokenliste auch O-Tupel enthalten.

Nach Ausführungsformen beinhaltet das Modell die Tokenliste und/oder eine modifizierte oder ergänzte Kopie dieser Tokenliste. Das Modell kann z.B. die Metadaten (Tokenklassen, vorberechnete Zählwerte für das Auftreten von Token und Tupeln, Tupel-Templates mit einschränkenden Bedingungen für Tokenabstände für das Identifizieren neuer Tupel etc.) beinhalten.

Das fertige Modell kann nun zur Lösung von Problemen genutzt werden. Wenn ein neuer Input-Datensatz eingegeben wird, wird dieser tokenisiert und sämtliche im Modell bereits enthaltenen I-Tupel (der Länge und Häufigkeit nach absteigend geordnet) gegen die Inputtoken und deren Positionen verglichen, um festzustellen, ob die Input-Token des I-Tupels im neuen Input-Datensatz vorkommen. Die geordnete I-Tupel Liste wird der Reihe nach abgearbeitet bis nur noch I-Tupel mit einzelnen Input-Token übrigbleiben, die nicht gefunden wurden. Die neu gefundenen Token werden als neue Einträge in die Tokenliste aufgenommen. Neue verknüpfte Wortgruppen werden automatisiert erstellt, wenn eine charakteristische Wortgruppe mehrfach vorkommt oder ein noch schärferes Korrelationskriterium erfüllt. Vorzugsweise werden für alle Token aller erkannten I-Tupel und IO-Tupel statistische Größen wie Gesamthäufigkeit, ein Korrelationsscore, Standardabweichung von Tokenabständen etc. berechnet und verknüpft mit dem I-Tupel oder IO-Tupel in dem Modell gespeichert. Diese statistischen Größen können zur Berechnung der Vorhersage (z.B. Übersetzung, Statusvorhersage für technische Systeme, etc.) verwendet werden.

Ausführungsformen können den Vorteil haben, dass ein datenbankbasiertes, nachvollziehbares und ressourcenschonendes Verfahren zum maschinelle Lernen bereitgestellt wird. Viele bestehende Datenbanksysteme wie z.B. Cortex-DB umfassen alle zum maschinellen Lernen nötigen Operationen wie z.B. Mengenoperationen oder Aggregationsfunktionen. Somit wird ein kontinuierliches Lernen durch das Lernmodul unter Berücksichtigung aller von dem System bzw. dem Lernmodul gesehenen Daten ermöglicht.

Die Datenbank speichert gemäß eines Beispiels alle empfangenen Datensätze in einem dokumentenorientierten Datenmodell. Ein dokumentenorientiertes Datenmodell bedeutet, dass das Datenmodell keine strukturellen Vorgaben an die zu speichernden Daten stellt. Vielmehr werden die Daten in Dokumenten bzw. Datencontainern in der Form gespeichert, in der empfangen werden. In diesem Sinne handelt es sich bei den in dem dokumentenorientierten Datenmodell gespeicherten Daten um Rohdaten. Rohdaten bedeutet, dass die Daten in der Form abgespeichert werden, in der sie empfangen werden, ohne eine zusätzliche Datenverarbeitung durch das Datenbankmanagementsystem, insbesondere keine Umstrukturierung der Daten. Ausführungsformen können den Vorteil haben, dass somit der gesamte Informationsgehalt der empfangenen Daten (nahezu) vollständig beibehalten werden kann, ohne dass Vorannahmen des Datenbankmanagementsystems einfließen. Das Datenbankmanagementsystem ebenso wie das Lernmodul können jederzeit auf die ursprünglichen Datenbestände zurückgreifen und diese in bei der weiteren Verarbeitung berücksichtigen.

Basierend auf diesem Datenpool an Rohdaten, welchen das dokumentenbasierte Datenmodell bereitstellt, wird eine Tokenliste erzeugt, und durch Anwendung von Datenbankoperationen auf die Adressen der Listeneinträge der Tokenliste wird die Tokenliste um zusätzliche, gelernte Informationen, insbesondere Korrelationsinformationen, die innerhalb der IO-Tupel und optional auch I-Tupel und O-Tupel repräsentiert sind, erweitert. Erst durch die Datenbankoperationen werden aus den Datensätze strukturelle Information bzw. Sinnzusammenhänge extrahiert. Diese strukturellen Informationen bzw. Sinnzusammenhänge können in Form von Zuordnungen (I-Tupel oder IO-Tupel) und optional zudem auch in Form von Klassenzuordnungen der in der Liste gespeicherten Token gespeichert werden.

Hierzu werden die Datensätze durch eine Tokenisierung auf ein elementares Niveau heruntergebrochen, welches die elementaren Bestandteile der Datensätze in Form der Token berücksichtigt. Die Token werden durch das Lernmodul im Hinblick auf deren Korrelation mit anderen Token und/oder Zugehörigkeit zu bereits definierten I-Tupeln und IO-Tupeln untersucht.

Hierdurch werden die Token-Zuordnungen nach bekannten Daten, welche gesicherten Fakten darstellen, und unbekannte Daten differenziert. Ausführungsformen können den Vorteil haben, dass die Verwendung der von einem Lernmodul bestimmten Strukturen und Gesetzmäßigkeiten in den Datensätzen, welche sich in den I-Tupeln und IO-Tupeln niederschlagen, auf den einer Verwendung der vorbestimmten Tupeln beruht. Unbekannt Daten werden demgegenüber als solche erfasst und solange außen vorgelassen werden, bis diese ebenfalls klassifiziert und mithin als gesicherte Fakten angesehen werden können.

Ausführungsformen können den Vorteil haben, dass keine zufällige Initialisierung erforderlich ist, wie etwa bei bekannten selbstlernenden Systemen, z.B. neuronalen Netzwerken. Die Initialisierung kann vielmehr auf einigen vordefinierten I-Tupeln und IO-Tupeln beruhen.

Ausführungsformen der Erfindung können den Vorteil haben, vollständig deterministisch zu sein.

Nach Ausführungsformen implementiert das System einen Algorithmus zum maschinellen Lernen, wobei das Verfahren nicht beschränkt ist auf einen bestimmten Algorithmus. Nach Ausführungsformen umfasst der Algorithmus zum maschinellen Lernen zumindest einen Klassifizierungsalgorithmus zum Klassifizieren von Token.

Bei dem maschinellen Lernen kann es sich um ein überwachtes oder ein unüberwachtes Lernen handeln. Das maschinelle Lernen kann eine Klassifizierung und/oder eine Regressionsanalyse umfassen. Ein Lernalgorithmus versucht, eine Hypothese bzw. eine Abbildung zu finden, welche jedem Eingabewert den (vermuteten) Ausgabewert zuordnet. Liegen die zuzuordnenden Ausgabewerte in einer kontinuierlichen Verteilung vor, deren Ergebnisse beliebige quantitative Werte eines vorgegebenen Wertebereiches annehmen kann, wird im Allgemeinen von einem Regressionsproblem gesprochen. Liegen die zuzuordnenden Ausgabewerte hingegen in diskreter Form vor bzw. sind die Werte qualitativ, wird im Allgemeinen von einem Klassifikationsproblem gesprochen. Nach Ausführungsformen stützt sich das maschinelle Lernen auf die Klassifikation der indizierten Token. Gemäß Ausführungsformen der Erfindung umfasst das Lernmodul einen speziell für das maschinelle Lernen entwickelten Algorithmus, wie zum Beispiel, ohne darauf beschränkt zu sein, eine dichtenbasierte multidimensionale Ausreißererkennung (engl. "local outlier detection"), ein Random-Forrest-Algorithmus, ein Neuronales Netz, eine Support-Vektor-Maschine, ein Naive-Bayes-Klassifikator oder eine Rückkopplung ähnlich der Rückkopplung eines linearen oder nichtlinearen Reglers.

Figur 2 zeigt, dass die Tokenliste 262 Bestandteil des prädiktiven Modells 122 sein kann und eine Mischung verschiedener Elemente enthält. Bereits vor dem ersten Lernschritt können einige Inputtoken 302 und Outputtoken 330 in der Liste enthalten sein. Nach dem Training kommen noch IO-Tupel 268 und vorzugsweise weitere I-Tupel und/oder O-Tupel sowie optional weitere Inputtoken und Outputtoken hinzu. Wenn man die Tokenliste als N-dimensionale Matrix speichert oder veranschaulicht, leitet sich die Zahl N der Dimensionen als Summe der Anzahl #1 der Inputtoken, der Anzahl #2 der Outputtoken, der Anzahl #3 der IO-Tupel, und, sofern vorhanden, der Anzahl #4 weiterer Tupel (z.B. I-Tupel und O-Tupel) ab. Jedes der Tupel kann als Konkatenation der einzelnen im Tupel enthaltenen Token gespeichert werden. Die Listen 302, 330, 266 und 268 können als separate Listen gespeichert sein, vorzugsweise werden sie jedoch als eine einzige nicht-redundante Tokenliste gespeichert.

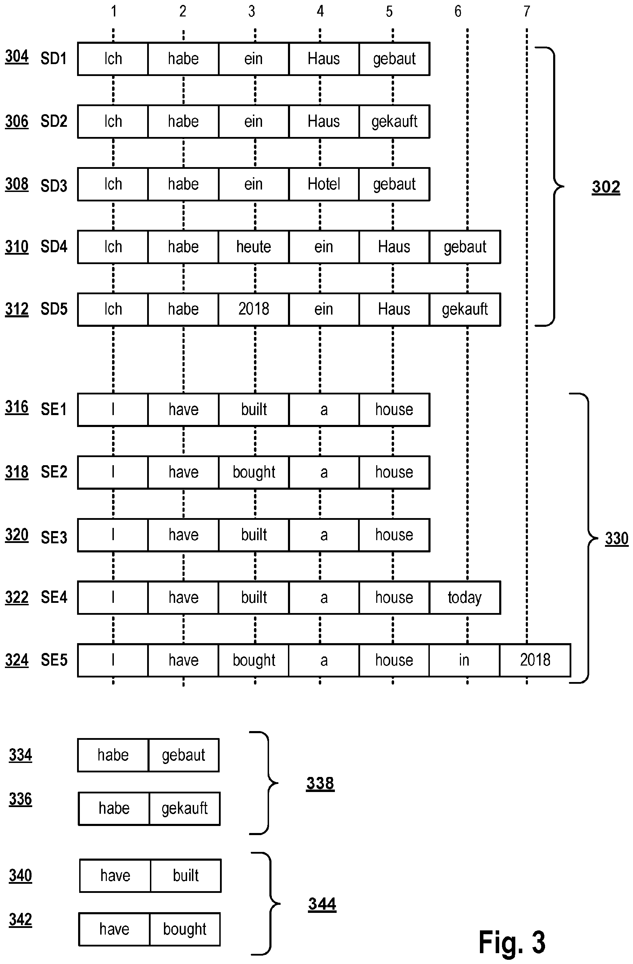

**Figur** 3 zeigt eine Vielzahl 302 von Input-Datensätzen 304-312 sowie diesen jeweils zugewiesenen Output-Datensätzen 330, 316-324 unter Berücksichtigung einzelner Tokenpositionen. Die Tokenpositionen innerhalb der Datensätze sind mit vertikalen Linien angedeutet. Unten in der Figur ist eine Menge 338 von I-Tupeln 334, 336 dargestellt, die durch automatisierte, datenbankgestützte Korrelationsanalyse dieser und weiterer Input-Datensätze als besonders häufig zusammen auftretendes Paar von Inputtoken identifiziert wurden. Außerdem ist dort eine Menge 338 von O-Tupeln 338, 340 dargestellt, die durch automatisierte, datenbankgestützte Korrelationsanalyse dieser und weiterer Output-Datensätze als besonders häufig zusammen auftretendes Paar von Outputtoken identifiziert wurden. Auf analoge Weise werden auch IO-Tupel durch eine Korrelationsanalyse von Input- und Outputtoken innerhalb einander zugeordneter Input- und Output-Datensätze ermittelt.

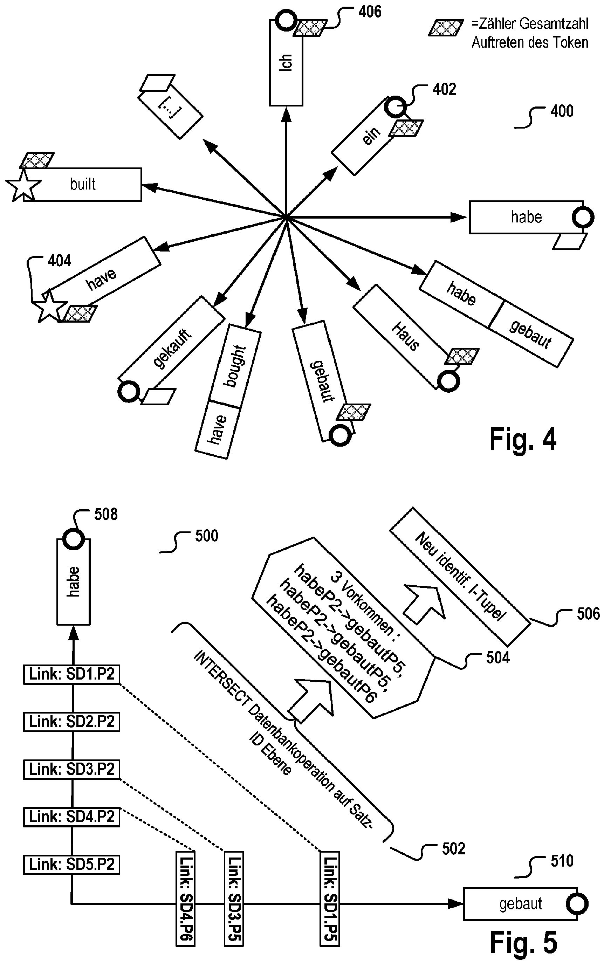

**Figur 4** zeigt eine graphische Repräsentation 400 einer Tokenliste, die Inputtoken, Outputtoken, I-Tupel, O-Tupel und IO-Tupel (letztere nicht graphisch dargestellt) vereint. Die Tokenliste wird hier in Form einer N-dimensionalen Matrix visualisiert, wobei jedes Element der Tokenliste einer Dimension (Achse) der Matrix entspricht.

Jedes Tokenlistenelement (Token wie Tupel) ist mit Metadaten verknüpft gespeichert. Die Metadaten 402-406, hier als Kreise und Sterne repräsentiert, geben z.B. an, ob ein Token ein Inputtoken oder ein Outputtoken ist. Die Metadaten können weitere, vorberechnete Daten enthalten, z.B. eine Gesamtanzahl des Vorkommens des Tokens oder Tupels in der Gesamtheit der Input- oder Output-Datensätze, eine über diese Gesamtheit aggregierte Tokenposition dieses Tokens, etc., beinhalten.

Gemäß einer Ausführungsform ist für jedes Dimensionenpaar (also jegliche mögliche Kombination zweier Inputtoken, Outputtoken, IO-Tupel, I-Tupel oder O-Tupel) ein Zahlenwert (z.B. als Bestandteil der Metadaten) gespeichert, der die Anzahl der Datensätze angibt, in welchen die von den beiden Dimensionen repräsentierten Elemente zusammen auftreten.

**Figur 5** zeigt einen Prozess der automatischen Identifikation eines I-Tupels korrelierender Inputtoken. Gemäß dieser Ausführungsform ist jedes Token in der Tokenliste 400 mit einer Liste an Zeigern auf diejenigen Datensätze (hier: Input-Datensätze) verknüpft gespeichert, in welchen das Inputtoken enthalten ist. Diese Zeiger sind hier als "Links" dargestellt und beziehen sich auf die in Figur 3 dargestellten Sätze. "SD1.P2" bedeutet z.B. "deutschsprachiger Satz 1, Position 2". Somit ist das Token 508 verknüpft mit 5 Zeigern auf 5 verschiedene Input-Datensätze in der Tokenliste gespeichert, Token 510 ist verknüpft mit 3 Zeigern in der Tokenliste gespeichert. Vorzugsweise sind die Zeiger jedoch keine URLs oder ASCI-basierte Zeichenketten, sondern bitweise kodierte Datenwerte fixer Länge.

Die Zeiger sind jeweils so gespeichert, dass sie einer Datenbank-INTERSECT Operation (also der Berechnung einer Schnittmenge zweier Mengen) zugänglich sind. Insbesondere kann das beinhalten, dass jeder Zeiger in einem eigenen Datenbankfeld gespeichert ist. Dadurch, dass eine INTERSECT Operation 502 auf alle Zeiger des Tokens 508 und alle Zeiger des Tokens 510 durchgeführt wird, wird eine Schnittmenge aus drei Zeigern ermittelt (hier mit gestrichelten Linien dargestellt), die auf Input-Datensätze verweisen, die beide Token 508, 510 enthalten. Außerdem führt die Datenbank eine Berechnung durch, ob die Korrelation dieser beiden Token höher ist als dies zufallsbasiert angesichts der jeweiligen Token-Gesamthäufigkeiten zu erwarten wäre. Auch eine zusätzliche Berücksichtigung der Tokenpositionen und ihrer Abstände wird durchgeführt. Beispielsweise werden Koinzidenz-Events, bei welchen die Token in einem zu großen Abstand auftreten, ignoriert. Das Ergebnis der Analyse 504 wird in der Form eines neuen, automatisch identifizierten I-Tupels in Schritt 506 gespeichert.

In einer Ausführungsform werden die Zeiger auf die Ursprungs-Datensätze so spezifiziert, dass diese zusätzlich auch die Position des Tokens beinhalten. Bei dieser Art und Wiese, Zeiger zu spezifizieren, führt die INTERSECT Operation 502 automatisch dazu, dass ausschließlich I-Tupel gebildet werden, die die jeweiligen Token an exakt der gleiche Position innerhalb der jeweiligen Datensätze haben. Dies kann den Rechenaufwand reduzieren, da eine nachgeschaltete Positionsanalyse nicht erforderlich ist. Allerdings führt sie zur Bildung einer großen Zahl an I-Tupeln mit nur kleinen Variationen bezüglich der Position einzelner Token.

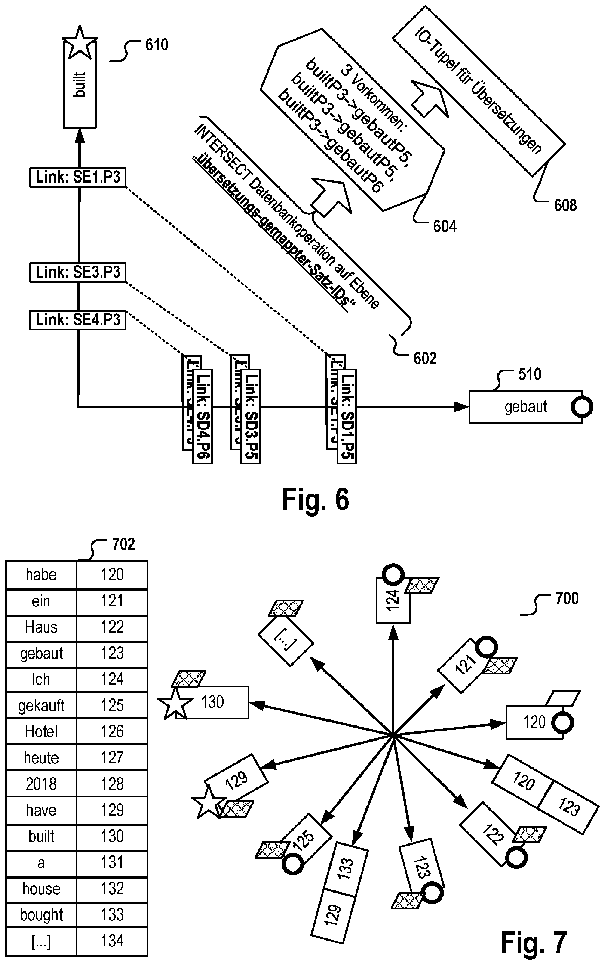

**Figur** 6 zeigt einen Prozess der automatischen Identifikation eines IO-Tupels korrelierender und semantisch korrespondierender Input- und Output-Token. Sie Schritte 602, 604, 608 laufen analog zu den für die I-Tupel beschriebenen Schritte 502-508 ab mit dem Unterschied, dass es sich nicht um zwei Input-Token sondern um ein Input- und ein Output-Token handelt. Allerdings muss sichergestellt sein, dass für die INTERSECT Operation die Zeiger auf die Output-Datensätze aus Identifikatoren derjenigen Input-Datensätze sind, denen diese Output-Datensätze zugeordnet sind, damit die INTERSECT Operation funktionieren kann. Die INTERSECT Operation wird hier nur auf der Ebene der Satz-IDs durchgeführt, da sich die absoluten und relativen Positionen der Token der Inputsätze von den Positionen der korrespondierenden Token in den Output-Sätzen unterscheiden kann.

Nach Ausführungsformen der Erfindung macht der Vorgang der automatischen Identifikation von IO-Tupeln keinen Unterschied zwischen einzelnen Inputtoken, Outputtoken, I-Tupeln und IO-Tupeln, da alle diese Token bzw. Tupel als Element der Tokenliste gespeichert werden. Die Art der Speicherung der Token-Tupel und der einzelnen Token in der Tokenliste 700 ist gleich. Jeder neue Token und jeder neue Tupel korrespondieren zu und erzeugen ein neues Element der Tokenliste, wie sie z.B. in Figur 7 dargestellt ist.

**Figur 7** zeigt eine graphische Repräsentation einer Tokenliste 700, die Inputtoken, Outputtoken, I-Tupel und O-Tupel vereint, wobei die Token als numerische Werte repräsentiert sind. Die Tokenliste 700 korrespondiert zu dem in Figur 4 gezeigten Tokenliste 400, mit dem Unterschied, dass die Tokenwerte durch numerische Werte ersetzt werden.

Die numerischen Werte können z.B. primäre Datenbankschlüssel sein, die zusammen mit den jeweiligen "Original"-Token in einer separaten Tabelle 702 gespeichert sind.

Dies kann die Ladezeit der Tokenliste in den Arbeitsspeicher reduzieren, da diese keine Tokenstrings beinhalten, die in der Regel einen höheren Speicherbedarf haben.

Gemäß bevorzugten Ausführungsformen werden Metadaten wie z.B. die Klassenzugehörigkeit und/oder Häufigkeit von Token und Token-Tupeln nicht auf einem nicht-flüchtigen Speichermedium gespeichert, sondern lediglich temporär berechnet und im Arbeitsspeicher abgelegt.

Wenn Metadaten abgespeichert werden, so werden sie vorzugsweise so gespeichert, dass das Token bzw. die I-Tupel, IO-Tupel oder O-Tupel, auf die sich die Metadaten beziehen, auf ihre jeweiligen Metadaten verweisen. Die Metadaten werden vorzugsweise als Bestandteil des prädiktiven Modells aber außerhalb der Tokenliste gespeichert, auf welche die Datenbankoperationen angewandt werden, sodass die Menge der Daten, die bei der Erzeugung, Aktualisierung oder Verwendung der Tokenliste in den Arbeitsspeicher geladen werden muss, reduziert wird. Die Verwendung numerischer Zahlen als Repräsentanzen für Token und Tokentupel und/oder die Speicherung der Metadaten außerhalb der Tokenliste kann den Vorteil haben, dass die Größe der Tokenliste auch bei einem sehr umfangreichen Datensatz an Token noch problemlos und schnell komplett auch in vergleichsweise kleine Arbeitsspeicher geladen werden können, sodass die Berechnung des Modells auf sehr effiziente Weise ohne Swapping-Effekte durchgeführt werden kann.

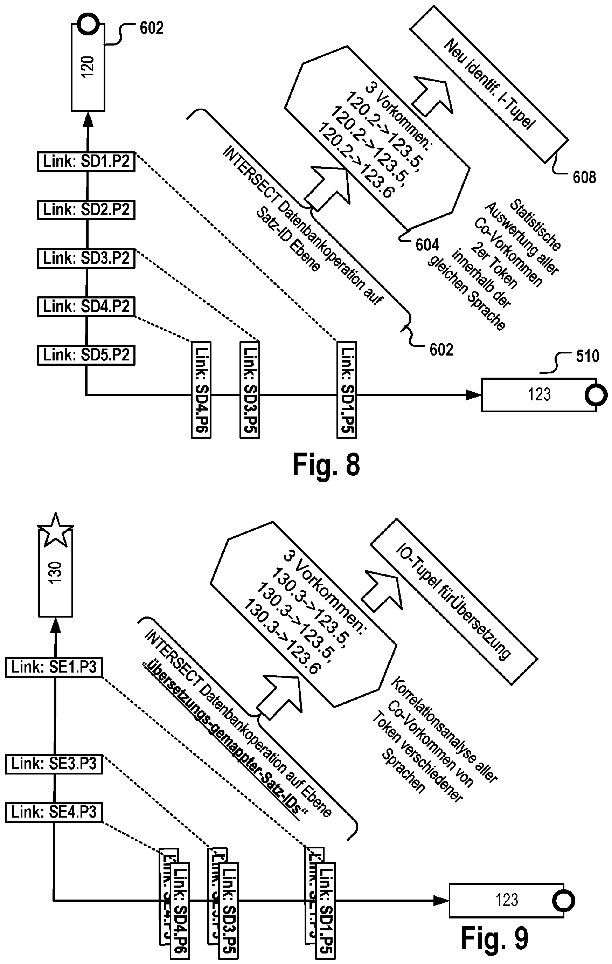

**Figur 8** zeigt einen Prozess der automatischen Identifikation eines I-Tupels korrelierender Inputtoken unter Berücksichtigung von Tokenabständen. Der Prozess entspricht dem in Figur 5 dargestellten Prozess, wobei in der Tokenliste allerdings numerische Werte anstatt der Token enthalten sind. Die numerischen Werte sind Zeiger (z.B. Datenbankschlüssel, die auf eine separate Tabelle, die die jeweiligen Token enthält, wie für Figur 7 beschrieben).

**Figur 9** zeigt einen Prozess der automatischen Identifikation eines IO-Tupels korrelierender und semantisch korrespondierender Input- und Output-Token. Der Prozess entspricht dem in Figur 6 dargestellten Prozess, wobei in der Tokenliste allerdings numerische Werte anstatt der Inputtoken enthalten sind. Die numerischen Werte sind Zeiger (z.B. Datenbankschlüssel) auf eine separate Tabelle, die die jeweiligen Token enthält, wie für Figur 7 beschrieben.

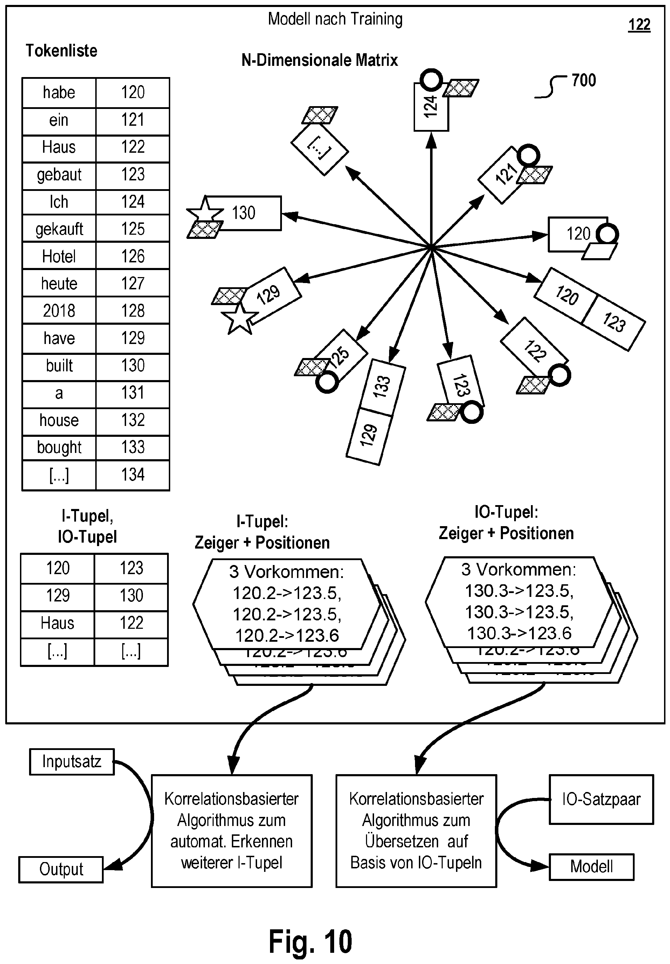

**Figur 10** zeigt ein Übersichtsbild der unterschiedlichen Nutzung von I-Tupeln und IO-Tupeln. Während die I-Tupel Muster innerhalb der Input-Datensätze repräsentieren, z.B. bei dem Übersetzungsbeispiel Redewendungen und feststehende Ausdrücke, repräsentieren die IO-Tupel vorgegebene und/oder automatisch erlernte Übersetzungen von ein oder mehreren Input-Token in bestimmte Output-Token. Während die I-Token dazu dienen, als Basis für die automatische Erkennung neuer, größerer I-Tupel und/oder als Basis für die automatische Erkennung neuer, komplexer IO-Tupel mit mehreren Inputtoken zu dienen, dienen die IO-Tupel dem Zweck, eine Übersetzung für einen neuen Eingabesatz ausgeben zu können. Somit können mit den gleichen Datenstrukturen und den gleichen Datenbankoperationen mehrere unterschiedliche Lerneffekte erzielt werden, die letztlich alle dazu beitragen, dass weitgehend automatisch ein Modell erzeugt wird, welches eine akkurate Übersetzung zurückgeben kann.

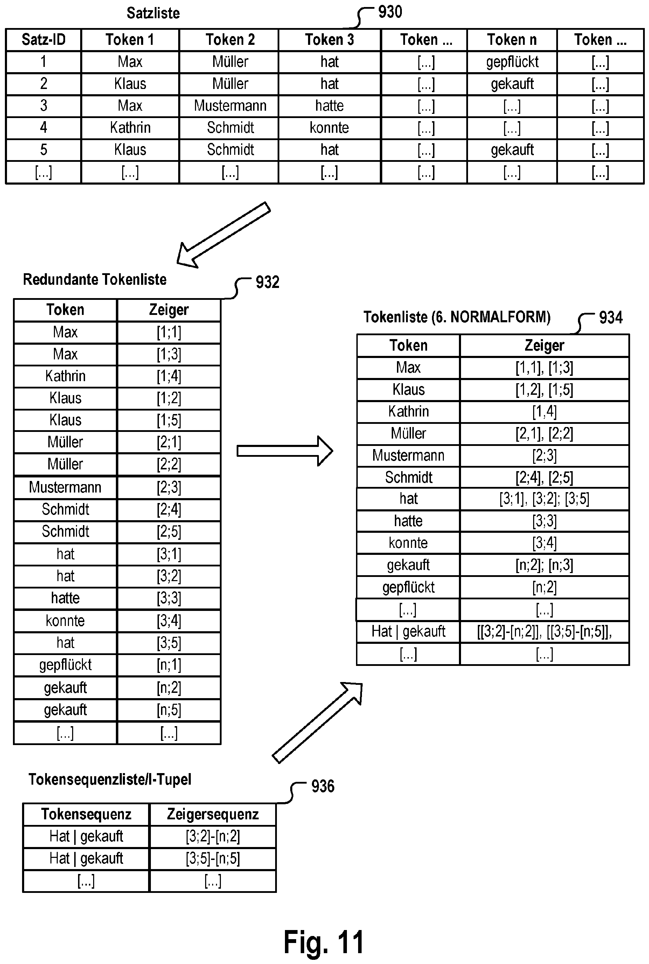

**Figur 11** zeigt mehrere Tabellen, die den Prozess der Überführung eines Datensatzes in eine Tabelle in der 6. Normalform. Eine Tabelle ist in der 6. Normalform (6NF), wenn die Zeile den Primärschlüssel und höchstens ein weiteres Attribut enthält"). In Tabellen in der 6. Normalform gemäß bevorzugten Ausführungsformen der Erfindung haben die Einträge jeweils noch einen Zeitstempel. Die Zeitstempel beschreiben die Entwicklung eines Datenfeldes mit der Zeit.

Gemäß Ausführungsformen dienen eine oder mehrere Tabellen der 6. Normalform als die Tokenliste, auf welcher die Mengenoperationen ausgeführt werden. Beispielsweise könnten die durch den Tokenisierer erzeugten Token zunächst temporär ein einer Tabelle 930 gespeichert werden, welch die Token eines Datensatzes innerhalb einer Zeile verknüpft mit einem Identifikator des jeweiligen Datensatzes speichert. Beispielsweise kann jede Spalte dieser Tabelle eine Position repräsentieren. Diese Ausgangstabelle kann sodann in eine redundante Tokenliste überführt werden, die einen Zeiger auf den ursprünglichen Datensatz und die Position des Tokens enthält. Im nächsten Schritt wird diese redundante Liste in eine Liste der 5. Normalform, also eine nicht redundante Liste, überführt, in welcher jedes Token nur einmal vorkommt und jeweils mit einem oder mehreren Zeigern verknüpft gespeichert ist, die jeweils den Ort des Auftretens (Datensatz und vorzugsweise auch Datenbank sowie Computersystem) und vorzugweise auch die Position des Tokens innerhalb dieses Datensatzes angeben oder mit der Position verknüpft gespeichert sind. In einem weiteren Schritt wird die Tabelle 932 in die 6. Normalform überführt, die als die Tokenliste verwendet werden kann. Die Tokenliste beinhaltet vorzugsweise zusätzlich Zeitstempel, die für jeden der in der Liste enthaltenen Token die Zeit der erstmaligen Entdeckung in einem Datensatz und der Hinzufügung zu der Tokenliste angibt. Die Zeitstempel beschreiben die Entwicklung eines Datenfeldes mit der Zeit (append Operationen). Die Zeitstempel werden hier aus Platzgründen nicht angezeigt. Die Tabelle 934 kann z.B. als Tokenliste verwendet werden, die sowohl Inputtoken als auch Outputtoken in nicht-redundanter Form beinhaltet.

Gemäß Ausführungsformen ist die Tokenliste eine Tabelle oder ein Array.

Nach bevorzugten Ausführungsformen besteht jedes Element der Tokenliste aus drei Teilelementen der Struktur [Tokenadresse |Tokenwert | Vorkommensliste]. Die Vorkommensliste ist eine Sequenz, z.B. ein Array oder ein Vektor, von ein oder mehreren Zeigern. Die Zeiger weisen auf Datensätze, in welchen das Tokenlistenelement vorkommt. Die Zeiger können verknüpft mit zugehörigen Positionen des Auftretens der Einzeltoken oder Token des jeweilgen Tupels in der Sequenz gespeichert sein. Vorzugsweise sind die Zeiger in den Vorkommenslisten aller Tokenlistenelemente Datensatzadressen gleicher Länge, d.h., die Zeiger belegen alle die gleiche Anzahl an Bits in einem Datenspeicher. Dies kann vorteilhaft sein, da die Datenbankoperationen, insbesondere INTERSECT Operationen auf den Adressen, bei Vergleich von Adressen gleicher Länge besonders effizient ausgeführt werden können. Die Länge der Tokenwerte und die Anzahl der Zeiger kann dagegen eine variable Länge haben.

**Figur 12** zeigt ein I-Tupel mit Platzhaltern und Boolschen Operatoren. Beispielsweise kann das I-Tupel "habe-gebaut" in seinen Metadaten eine komplexe Spezifikation mehrerer Token-Platzhalter beinhalten, die mit Boolschen Operatoren verknüpft sind. Die Platzhalter können bestimmte Token oder Tokenklassen spezifizieren. Bei der automatischen Suche nach dem Vorhandensein eines solchen komplexen I-Tupels innerhalb eines Input-Datensatzes werden sowohl Positionsinformationen als auch die logischen Operatoren ausgewertet. Beispielsweise unterstützen einige DBMSs nicht nur Mengenoperationen, sondern auch Boolsche Operationen und Kombinationen davon und erlauben dadurch eine komplexe Suche nach dem Vorhandensein bestimmter Tokenmustern in einem Datensatz. Die Suche wird hierbei ausschließlich auf Basis der Zeiger und Positionsangaben innerhalb der Tokenliste durchgeführt, nicht auf den Rohdaten, und ist daher um ein Vielfaches schneller als eine konventionelle Patternsuche (Mustersuche, Ausdrucksuche) innerhalb eines Volltexts.

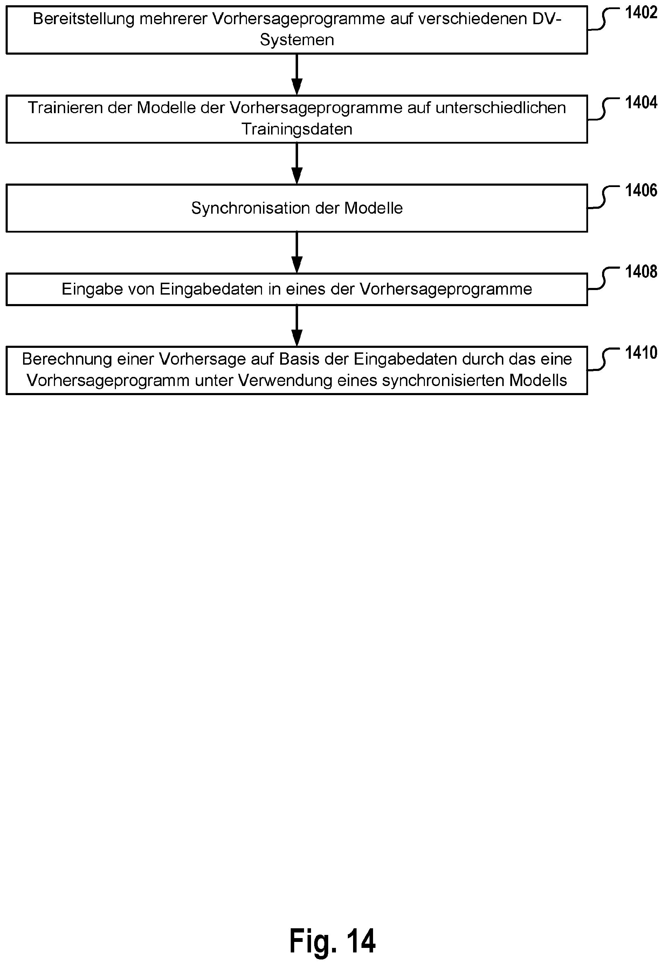

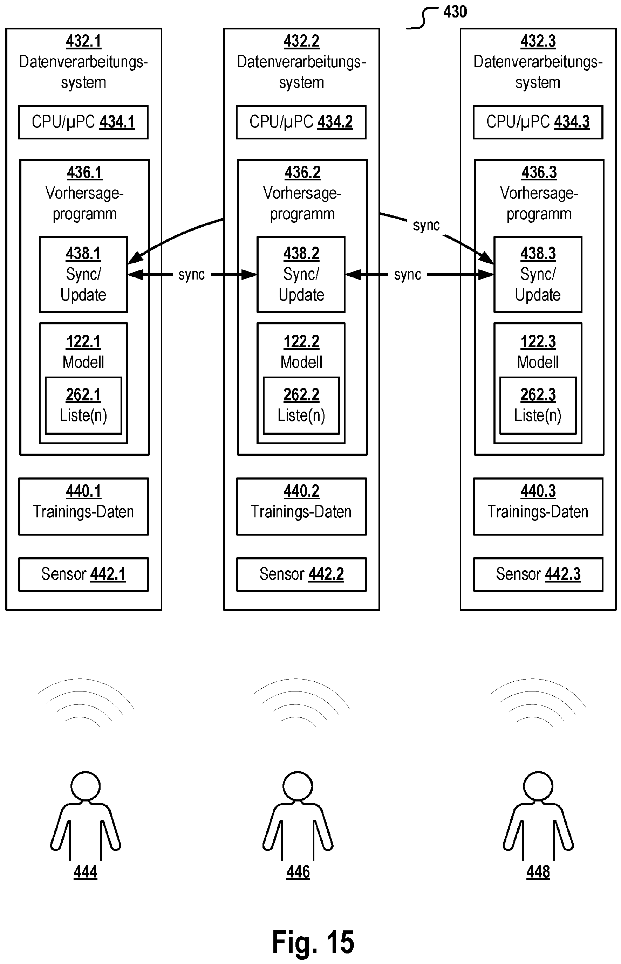

**Figur 14** zeigt ein Flussdiagramm eines Verfahrens zur Integration mehrerer trainierter ML-Modelle 122 gemäß einer Ausführungsform. Beispielsweise kann mit diesem Verfahren ein System 4300 zur Integration mehrerer verteilter ML-Modelle bereitgestellt und werden, wie es in **Figur 15** abgebildet ist. Im Folgenden wird daher das Verfahren gemäß Figur 14 unter Bezugnahme auf das System in Figur 15 beschrieben und umgekehrt. Es ist jedoch auch möglich, dass das System 430 auf andere Weise bereitgestellt wird oder das Verfahren in Figur 14 für andere Systeme als in Figur 15 dargestellt ausgeführt wird, sodass Bezugnahmen auf die jeweils andere Figur nur beispielhaft zu verstehen sind.

In einem ersten Schritt 1402 werden mehrere Vorhersageprogramme 436.1, 436.2, 436.3 mit unterschiedlichen ML-Modellen 122.1, 122.2, 122.3 bereitgestellt. Bei den unterschiedlichen ML-Modellen kann es sich um ML-Modelle handeln, die auf unterschiedlichen Trainingsdaten trainiert wurden, sodass sich die während des Trainings erlernten Zuordnungen von Token und Tokenpositionen und/oder der Inhalt der nicht-redundanten Tokenliste(n) 262 unterscheiden.

Die Bereitstellung kann z.B. darin bestehen, dass auf mehreren unterschiedlichen, vorzugsweise über ein Netzwerk miteinander verbundenen Datenverarbeitungssystemen 432.1, 432.2, 432.3 jeweils eines der Vorhersageprogramme installiert wird. Bei den Datenverarbeitungssysteme kann es sich z.B. um Standardcomputer oder portabel Computer, insbesondere Smartphones, oder vorzugsweise um Edgesysteme handeln. Beispielsweise kann jedes der Datenverarbeitungssysteme über einen oder mehrere Prozessoren 434.1, 434.2, 434.3, insbesondere Mikroprozessoren, verfügen. Vorzugsweise beinhaltet jedes der Datenverarbeitungssysteme ein oder mehrere Sensoren 416.1, 416.2, 416.3, die dazu ausgebildet sind, Messwerte zu erfassen und in einem flüchtigen oder nicht-flüchtigen Speichermedium des jeweiligen Datenverarbeitungssystems zu speichern. Bei den Messwerten kann es sich um verschiedene technische Parameter handeln, die den Zustand des Datenverarbeitungssystems, einzelner Komponenten dieses Systems und/oder Umgebungsparameter (Temperatur, GPS Position, etc.). Falls es sich bei dem Datenverarbeitungssystem z.B. um ein Smartphone handelt, können die sensierten Parameter z.B. CPU Last, Arbeitsspeicherbelegung, Beschleunigungsbewegungen etc. umfassen. Es kann sich bei den Datenverarbeitungssystemen auch um Geräte und Fahrzeuge handeln und die Messparameter können Zustandsparameter der Fahrzeuge oder Geräte oder deren Komponenten sein.

Gemäß einem Beispiel handelt es sich bei den Sensoren um Mikrophone, die Spracheingaben eines Nutzers 444, 446, 448, dem der Sensor jeweils zugeordnet ist, erfassen. Die erfassten Spracheingaben können z.B. aus Audiosignalen bestehen, die als Eingabedaten einer Ausgangssprache verwendet werden. Jedes Datenverarbeitungssystem beinhaltet eine Sprache-zu-Text Software, auch Spracherkennungssoftware genannt, welche die Audiosignale in einen Text umsetzt. Anders als in den bezüglich der Figuren 1 und 2 geschilderten Beispielen handelt es sich hier bei der Ausgangssprache und der Zielsprache also nicht um zwei unterschiedliche natürliche Sprachen, sondern um Audiosignale (gesprochener Text) einerseits und "verschriftlichter" Text (ASCI Text des gleichen semantischen Inhalts wie der gesprochene Text) andererseits. Der gesprochene und der verschriftlichte Text sind in der gleichen natürlichen Sprache, z.B. deutsch, spezifiziert. Beispielsweise kann der Nutzer 444 im Laufe der Zeit (z.B. über Tage, Wochen, Monate und ggf. Jahre hinweg) die auf dem System 432.1 installierte Sprache-zu-Text Software (nicht dargestellt) nutzen, um diktierte und über das Mikrophon 442.1 erfasste Sprachdaten automatisch in Textdateien umzusetzen. Die Textdateien werden vom Nutzer manuell korrigiert und zusammen mit den Audiodateien abgespeichert. Die Audiodateien können - ähnlich wie geschriebene Texte - analysiert und geparst werden um daraus Bausteine, z.B. Phoneme (die kleinste bedeutungsunterscheidende Einheit des Lautsystems einer Sprache), als Token zu extrahieren. Die Position dieser Phoneme innerhalb der Audiodatei ist eine Tokenposition. Auch die den Audiodateien zugeordneten und manuell korrigierten Textdateien werden gemäß Ausführungsformen von einem geeigneten Parser analysiert um Wörter und Wortpositionen zu extragieren und somit textbasierte Token und Tokenpositionen aus den Texten zu gewinnen. Die so gewonnenen und einander zugeordneten Paare von Audiotoken und Texttoken, Audiotokenpositionen und Texttokenpositionen, Audiotokensequenzen und Texttokensequenzen, Audiotokenpositionensequenzen und Texttokenpositionensequenzen werden als Trainingsdaten verwendet, um ein ML-Modell 122.1 auf diesen zu trainieren.

Durch das Training des ML-Modells 122.1 auf den Trainingsdaten wird ein trainiertes ML-Modell bereitgestellt, welches in der Lage ist, Spracheingaben in Form von Audiosignalen mit hoher Qualität in Texte umzusetzen. Das trainierte ML-Modell kann nach dem Training in ein Vorhersageprogramm 436.1 integriert werden oder das Modell kann von vorneherein Bestandteil des Vorhersageprogramms sein. In manchen Ausführungsformen wird das trainierte ML-Modell sodann als die Sprache-zu-Text Software verwendet, um den Trainingsdatensatz auf Basis weiterer eingegebener Audiosignale kontinuierlich zu erweitern.

Jedes der Vorhersageprogramme 436.1, 436.2, 436.3 kann gemäß Ausführungsformen die zum Parsen der Eingabedaten (Audiodaten und Texte) erforderlichen Softwaremodule und Parser beinhalten. Gemäß anderer Ausführungsformen sind die für die Vorverarbeitung der Eingabedaten verwendeten Softwaremodule und Parser als Vorhersageprogramm-externe, separate Programme implementiert.

Gemäß Ausführungsformen beinhaltet jedes der Vorhersageprogramme 436.1, 436.2, 436.3 ein zur Berechnung des gleichen Vorhersagetyps (hier z.B. Umsetzung von Audiosignalen/Spracheingaben in Texte) trainiertes ML-Modell 122.1, 122.2, 122.3. Die trainierten Modelle der Vorhersageprogramme unterscheiden sich, da jedes der Datenverarbeitungssysteme 432.1, 432.2, 432.3 einem anderen Nutzer zugeordnet ist, der bzw. die im Laufe der Zeit unterschiedliche Spracheingaben tätigt, sodass auch die auf Basis dieser Spracheingaben gewonnenen Trainingsdatensätze unterschiedlich sind.

Beispielsweise beinhaltet jedes der in Figur 15 dargestellten ML-Modelle Paare 114, 116, 118, 120 einander zugeordneter Eingabetokensequenzen und Ausgabetokensequenzen, also z.B. Phonemsequenzen, die jeweils einer semantisch aquivalenten Wortsequenz zugeornet sind, und Paare einander zugeordneter Eingabetokenpositionensequenzen und Ausgabetokenpositionensequenzen, also z.B. Positionssequenzen von Phonemen innerhalb einer Audiodatei, die Positonssequenzen von Wörtern innerhalb einer Textdatei entsprechen. Da Wörter aus einem oder mehreren Phonemen bestehen können, können sich die Positionen trotz gleicher chronologischer Reihung von Phonemen und Wörtern unterscheiden.

In einem weiteren Schritt 1406 wird eine Synchronisation der im Zuge des Trainings von den Modellen erlernten Zuordnungen 106 derart durchgeführt, dass jedes Modell nach der Synchronisation den gleichen Satz an Zuordnungen und die gleichen Token (gespeichert z.B. in Form einer einzigen Liste mit Inputtoken, Outputtoken, konkatenierten Inputtoken je eines I-Tupels und/oder konkatenierten Outputtoken je eines O-Tupels sowie als eine Menge an IO-Tupel) beinhaltet.

Gemäß einer bevorzugten Ausführungsform beinhaltet jedes der Vorhersageprogramme ein Modul 438.1, 438.2, 438.3 zur Synchronisation der ML-Modelle, genauer gesagt der erlernten Zuordnungen, auf deren Basis jedes der Modelle seine Vorhersagen (hier: Umwandlung von Spracheingaben in ein Mikrophon in Text) berechnet, mit anderen ML-Modellen. Beispielsweise kann in jeder Vorhersagesoftwareinstanzen 436.1, 436.2, 436.3 eine Liste mit den Kontaktadressen weiterer Vorhersageprogramme gespeichert sein, mit welchen die erlernten Zuordnungen ausgetauscht werden sollen. Der Austausch kann regelmäßig, z.B. einmal täglich, einmal wöchentlich oder seltener durchgeführt werden je nach Vorhersageproblem und Dynamik der Erfassung weiterer Trainingsdaten durch die einzelnen Datenverarbeitungssysteme. Beispielsweise kann die Synchronisation darin bestehen, dass das Modell 122.1 seine erlernten Zuordnungen und Token an die anderen Modelle 122.2, 122.3 über ein Netzwerk sendet. Die anderen Modelle 122.2, 122.3 empfangen die exportierten Daten/Modellbestandteile und vergleichen deren Inhalt mit dem Inhalt 262 ihrer eigenen Modelle. Dieser Inhalt 262.2, 262.3 besteht ebenfalls aus erlernten Token sowie erlernten Zuordnungen von Token und Tokenpositionen von Inputtoken und/oder Outputtoken, wobei sich allerdings zumindest einige Token und erlernten Zuordnungen von Token und Tokenpositionen aufgrund der Unterschiedlichkeit der Trainingsdaten der Datenverarbeitungssysteme unterscheiden. Wenn der Vergleich ergibt, dass eines der Modelle, z.B. Modell 122.2, einige Token oder Zuordnungen nicht enthält, werden selektiv diese noch nicht bekannten Token und Zuordnungen in das Modell importiert. In analoger Weise können im Zuge der Synchronisation die Vorhersageprogramme 436.2 und 436.3 ihre erlernten Modellinhalte exportieren und über das Netzwerk an das Synchronisationsmodul 438.1 des Vorhersageprogramms 436.1 senden. Das Synchronisationsmodul 438.1 vergleicht den Inhalt der empfangenen Modellupdates mit dem Inhalt seines eigenen ML-Modells und integriert selektiv diejenigen Token und Tokenzuordnungen (vorzugsweise samt Referenzen und Tokenpositionen), die das Modell 122.1 noch nicht "kennt", in das Modell 122.1. Die Synchronisation stellt also sicher, dass jedes der ML-Modelle an dem Wissen, das sich andere ML-Module durch Training auf anderen, lokal erfassten Trainingsdaten angeeignet haben, partizipiert. Das dezentral auf mehreren Datenverarbeitungssystemen 432.1, 432.2, 432.3 erfasste und erlernte Wissen kann somit automatisch integriert werden.

In einem weiteren Schritt 1408, der nach der Synchronisationsschritt 1406 erfolgt, gibt ein Nutzer oder ein Softwareprogramm Eingabedaten in eines der Vorhersageprogramme ein. Beispielsweise spricht der Nutzer den Satz "Ich habe einen Turm gebaut" in das Mikrophon 442.1 des Datenverarbeitungssystems 432.1. Die Eingabedaten werden zur Testzeit eingegeben, also nachdem das Modell 122.1 trainiert wurde.

In Antwort auf die Eingabe in Schritt 306 berechnet das Vorhersageprogramm 436.1 in Schritt 1410 eine Vorhersage auf Basis der Eingabedaten unter Verwendung des synchronisierten Modells 122.1 dieses einen Vorhersageprogrammes. Die Vorhersage ist ein Text, der der Spracheingabe "Ich habe einen Turm gebaut" entspricht. Hätte der Nutzer 444 diese Spracheingabe vor der Synchronisation des Modells in alle drei Systeme 432.1, 432.2, 432.3, wäre der von den Vorhersageprogrammen bzw. ML-Modellen dieser drei Systeme berechnete Text womöglich unterschiedlich ausgefallen. Beispielsweise hätte es geschehen können, dass das Modell 122.1 das Audiotoken "Turm" kennt, das Modell 122.2 jedoch nicht, sodass das Modell 122.2 einen fehlerhaften Text erzeugt hätte. Da die Eingabe jedoch nach der Synchronisation erfolgt, ist sichergestellt, dass auch das Modell 122.2 das Token "Turm" kennt, auch wenn der Nutzer 446 dieses Wort noch nie in das System 432.2 eingegeben hat.

Gemäß bevorzugten Ausführungsformen erfasst jedes der Systeme 432.1, 432.2, 432.3 kontinuierlich weitere Trainingsdaten (also Audioeingaben samt den daraus automatisch erzeugten und manuell korrigierten Ausgabetexten) und verwendet diese wiederholt, um den lokal gespeicherten Trainingsdatensatz zu erweitern und das ML-Modell auf den erweiterten Trainingsdatensatz erneut zu trainieren und dadurch zu verbessern. Durch regelmäßige Synchronisation der während des Trainings jeweils lokal gelernten Token und Zuordnungen können Ausführungsformen der Erfindung sicherstellen, dass alle ML-Modelle vom Lernerfolg aller anderen Modelle kontinuierlich profizieren, ohne dass hierfür große Mengen an - potentiell sensiblen - Trainingsdaten hierfür über ein Netzwerk übertragen werden müsste.

Gemäß manchen Ausführungsformen werden die im Zuge des Trainings von einem ML-Modell erlernten Zuordnungen jeweils in einer Datenbank, z.B. einer lokalen Datenbank eines der Datenverarbeitungssysteme 432.1, 432.2, 432.3 gespeichert.

Bei der Datenbank kann es sich um eine Multi-Modell-Datenbank handeln. Dieser Datenbanktyp kann gemäß Ausführungsformen der Erfindung den Vorteil haben, eine schemalose Datenablage auf Basis eines Dokumentenspeichers sowie eine vollständige Normalisierung des gesamten Datenumfangs in der sechsten Normalform zu ermöglichen. Nach Ausführungsformen werden die Token in der nichtredundanten Tokenliste sortiert gespeichert, wobei die Token vorzugsweise als Zugriffsschlüssel verwendet werden, wobei jedem Schlüssel ein oder mehrere Zeiger ("Referenzen") auf Datensätze zugeordnet sind, wobei die Zeiger anzeigen, in welchen Datensätzen und/oder Feldern der Datensätze der entsprechende Schlüssel, d.h. Token/Datenwert, als Feldwert gespeichert ist.

Vorzugsweise bildet die nichtredundante Tokenliste den Inhalt sämtlicher Felder bzw. Attribute der Rohdatensätze ab. Alle Token werden unabhängig davon, welches Attribut sie repräsentieren bzw. welchem Datenfeld in den Rohdaten sie entnommen wurden, in der nicht-redundanten Tokenliste gespeichert. Die geringe Größe der Liste im Vergleich zu den schemalosen Rohdaten ermöglicht schnelle Abfragen in beliebigen Abfragekombinationen.

### Bezugszeichenliste

- 102: Input-Datensatz
- 104: Input-Token
- 106: Tokenzuordnungen (Tupel)
- 108: Output-Datensatz
- 110: Output-Token
- 116-120: IO-Tupel
- 122: prädiktives Modell
- 202-210: Input-Token
- 212: I-Tupel
- 218-226: Output-Token
- 228: O-Tupel
- 250: Computersystem
- 252: Tokenisierer
- 254: Prozessoren
- 256: Datenbank
- 258: Input-Datensätze
- 260: Output-Datensätze
- 262: Tokenliste
- 266: I-Tupel
- 268: IO-Tupel
- 270: Datenbankoperationen
- 272: Tupel-Kriterien, z.B. Maximalabstände
- 302: Menge an Input-Datensätze
- 304-312: Input-Datensätze
- 330: Menge an Output-Datensätzen
- 316-324: Output-Datensätze
- 334: I-Tupel
- 336: I-Tupel
- 338: Menge an I-Tupeln
- 340: O-Tupel
- 342: O-Tupel
- 344: Menge an O-Tupel
- 400: Tokenliste
- 402: Metadaten: Typ= Input-Token
- 404: Metadaten: Typ= Output-Token
- 406: Häufigkeitszähler
- 402.1-402.3: Datenverarbeitungssystem (z.B. Edgesystem)
- 404.1-404.3: CPU (z.B. µCPU)
- 436.1-436.3: Vorhersageprogramm
- 438.1-438.3: Synchronisationsmodul
- 440.1-440.3: Trainingsdaten
- 442.1-442.3: Sensor
- 444-448: Nutzer
- 502: Schritt: Datenbank-INTERSECT-Operation
- 504: Schritt: stat. Auswertung der Koinzidenzen einschließlich Positionen
- 506: Schritt: Erstellung neuen I-Tupels
- 508: Input-Token
- 510: Input-Token
- 602: Schritt: Datenbank-INTERSECT-Operation
- 604: Schritt: statistische Auswertung der Koinzidenzen einschließlich Positionen
- 606: Schritt: Erstellung neuen IO-Tupels
- 610: Output-Token
- 700: Tokenliste mit numerischen Token-IDs
- 702: Token-ID-Tabelle
- 930: Tabelle mit zeilenweise gespeicherten Datensätzen
- 932: redundante Tokenliste
- 934: nicht-redundante Tokenliste
- 936: Tabelle mit I-Tupeln
- 950: Fläche
- 952: Halbkugeldarstellung auf GUI
- 954: Auswahl von Knoten durch Nutzer über GUI
- 956: Knoten für Output-Token
- 956-964: Knoten für Input-Token
- 966: Knoten für IO-Tupel
- 1302-1314: Schritte
- 1402-1410: Schritte

## Patentansprüche

1. Computerimplementiertes Verfahren zur Integration verteilter Machine-Learning Modelle, wobei das Verfahren umfasst:
- Bereitstellen (1402) mehrerer Vorhersageprogramme (406.1, 406.2, 406.3), die jeweils zur Berechnung des gleichen Vorhersageproblems dienen und die jeweils dazu konfiguriert sind, eine Vorhersagen auf Basis eines Machine-Learning (ML)-Modells (122.1, 122.2, 122.3) zu berechnen;
- Trainieren (1404) der Modelle der Vorhersageprogramme auf unterschiedlichen Trainingsdaten, wobei die Trainingsdaten jeweils eine Vielzahl von InputDatensätzen und Output-Datensätzen, die jeweils einem der Input-Datensätze zugeordnet sind, umfassen, wobei jeder Inputdatensatz eine Sequenz von ein oder mehreren Inputtoken ist und jeder Outputdatensatz eine Sequenz von ein oder mehreren Outputtoken ist, wobei das Training jedes der Modelle umfasst:
∘ Erzeugung einer nichtredundanten Tokenliste aus den Inputtoken und Outputtoken, wobei jedes Token in der semantikfreien Tokenliste nur einmal vorkommt unabhängig davon, ob es ein Inputtoken und/oder ein Outputtoken repräsentiert, wobei jedes Token in der semantikfreien Liste verknüpft gespeichert ist mit Referenzen auf die jeweiligen Inputdatensätze und Outputdatensätze, die dieses Token beinhalten, sowie verknüpft gespeichert ist mit der Position des Tokens innerhalb des jeweiligen Inputoder Outputdatensatzes;
∘ Ermittlung von IO-Tupeln durch Analyse der Tokenliste, wobei IO-Tupel jeweils aus ein oder mehreren Inputtoken und ein oder mehreren Outputtoken bestehen, welche innerhalb einander zugeordneter Paare an Inputdatensätzen und Output-Datensätzen mit zumindest einer Mindeststärke korrelieren; und
∘ Speicherung des Tokenliste und der IO-Tupel als Ergebnis des Lernens in das Modell;
- Synchronisation (1406) der Modelle derart, dass jedes Modell nach der Synchronisation die gleiche Tokenliste und den gleichen Satz an IO-Tupeln beinhaltet;
- Eingabe (1408) von Eingabedaten in eines der Vorhersageprogramme; und
- Berechnung (1410) einer Vorhersage auf Basis der Eingabedaten durch das eine Vorhersageprogramm unter Verwendung des synchronisierten Modells dieses einen Vorhersageprogrammes.

2. Computerimplementiertes Verfahren nach Anspruch 1, wobei die IO-Tupel gespeichert sind als zwei einander zugewiesene Konkatenate, wobei das erste Konkatenat eine konkatenierte Sequenz aller Inputtoken des IO-Tupels ist und das zweite Konkatenat eine konkatenierte Sequenz aller Outputtoken des IO-Tupels.

3. Computerimplementiertes Verfahren nach einem der vorherigen Ansprüche, wobei die Gesamtheit der Inputtoken eines jeden der IO-Tupel in Form eines Inputtokens in der Tokenliste gespeichert wird, wobei die Gesamtheit der Outputtoken eines jeden der IO-Tupel in Form eines Outputtoken in der Tokenliste gespeichert wird, wobei die Berechnung (308) der Vorhersage umfasst:
- für jedes der in der Tokenliste enthaltenen Token Prüfung, ob die Eingabe das Token enthält, wobei Token, die Bestandteil längerer und ebenfalls enthaltener Token sind, ignoriert werden;
- Zurückgabe eines Outputdatensatzes, welcher Outputtoken enthält, die dem identifizierten Token in einem der IO-Tupel zugewiesen ist.

4. Computerimplementiertes Verfahren nach einem der vorigen Ansprüche, wobei jedem der mehreren Vorhersageprogramme ein individueller Programminstanz-Wert zugewiesen ist, wobei jedes der Vorhersageprogramme dazu konfiguriert ist, jeden zum Training und/oder zur Vorhersage verwendeten Inputdatensatz, Outputdatensatz und in den Eingabedaten enthaltenen Datensatz eine Datensatz-ID zuzuweisen, der innerhalb aller der von einem einzelnen Vorhersageprogramm verarbeiteten Datensätze einzigartig ist, wobei jede Datensatz -ID den Programminstanz-Wert beinhaltet, sodass alle Datensatz-IDs global für alle Datensätze, die von den mehreren Vorhersageprogrammen verarbeitet werden, einzigartig sind, wobei die Referenzen der Input- und Outputtoken auf die Datensätze die Datensatz-IDs beinhalten.

5. Computerimplementiertes Verfahren nach einem der vorigen Ansprüche, wobei die Synchronisation der Modelle umfasst:
a) Fusionieren des Inhalts aller Modelle in ein nicht-redundantes, integriertes Model, das die gleichen Datenstrukturen wie die einzelnen Modelle beinhaltet, wobei im integrierten Modell jedes Inputtoken, Outputtoken und Tokentupel nur einmal vorkommt unabhängig von deren Vorkommenshäufigkeit in den einzelnen Modellen, wobei jedes Token der integrierten Tokenliste, das in den Tokenlisten mehrerer Modelle vorkommt, mit der Gesamtheit der Datensatzreferenzen dieses Tokens in den mehreren Modellen verknüpft gespeichert ist; und Ersetzen des Inhalts der einzelnen Modelle durch den Inhalt des integrierten Modells, sodass alle Modelle in einen synchronisierten Zustand überführt werden; oder
b) Identifikation derjenigen Input-Token und Output-Token des Tokenliste sowie derjenigen IO-Tupel in jedem der Modelle, die noch nicht synchronisiert wurden; selektive Übertragung der noch-nicht-synchronisierten Modellbestandteile einschließlich deren Referenzen an die anderen Modelle; und Synchronisation der Modelle dadurch, dass jedes Modell diejenigen Elemente der von den anderen Modellen übertragenen Modellbestandteile, die es noch nicht selbst beinhaltet, integriert, wobei im integrierten Modell jedes Inputtoken, Outputtoken und Tokentupel nur einmal vorkommt unabhängig von deren Vorkommenshäufigkeit in den einzelnen Modellen, wobei jedes Token der integrierten Tokenliste, das in den Tokenlisten mehrerer Modelle vorkommt, mit der Gesamtheit der Datensatzreferenzen dieses Tokens in den mehreren Modellen verknüpft gespeichert ist.

6. Computerimplementiertes Verfahren nach einem der vorigen Ansprüche, wobei die Vorhersageprogramme auf verschiedenen Datenverarbeitungsgeräten instanziiert sind und wobei die Synchronisation umfasst:
- Export der Modelle durch die jeweiligen Vorhersageprogramme;
- Übertragung der exportierten Modelle über ein Netzwerk von den jeweiligen Datenverarbeitungsgeräten an ein zentrales Datenverarbeitungssystem;
- Erzeugung eines integrierten Modells durch das zentrale Datenverarbeitungssystem;
- Durchführung der Synchronisation der Modelle durch Übertragung von Kopien des integrierten Modells von dem zentralen Datenverarbeitungssystem über ein Netzwerk an die Vorhersageprogramme;
- Import des integrierten Modells durch jedes der Vorhersageprogramme, um das bisher verwendete Modell durch das integrierte Modell zu ersetzen.

7. Computerimplementiertes Verfahren nach einem der vorigen Ansprüche 1-6, wobei die Vorhersageprogramme auf verschiedenen Datenverarbeitungsgeräten instanziiert sind und die Synchronisation eines ersten und eines zweiten der Modelle umfasst:
- Selektiver Export der noch-nicht-synchronisierten Modellbestandteile eines ersten Modells von einem ersten der Datenverarbeitungssysteme über ein Netzwerk an ein zweites der Datenverarbeitungssysteme, das ein zweites Vorhersageprogramm mit einem zweiten der Modelle verwendet; und Durchführung der Identifikation und Integration derjenigen der Elemente der exportierten Modellbestandteile, die noch nicht in dem zweiten Modell enthalten sind; und/oder
- Selektiver Export der noch-nicht-synchronisierten Modellbestandteile des zweiten Modells von einem zweiten der Datenverarbeitungssysteme über ein Netzwerk an ein erstes der Datenverarbeitungssysteme, das ein erstes Vorhersageprogramm mit einem ersten der Modelle verwendet; und Durchführung der Identifikation und Integration derjenigen der Elemente der exportierten Modellbestandteile, die noch nicht in dem ersten Modell enthalten sind.

8. Computerimplementiertes Verfahren nach einem der vorigen Ansprüche, wobei jedes der Vorhersageprogramme auf einem anderen Datenverarbeitungssystem (432.1, 432.2, 432.3) instanziiert ist, wobei es sich bei den Datenverarbeitungssystemen insbesondere um Mikrocontroller- oder Mikroprozessor-basiertes Datenverarbeitungssysteme handelt.

9. Computerimplementiertes Verfahren nach Anspruch 8, wobei jedes der Datenverarbeitungssysteme mindestens einen Sensor des gleichen Typs beinhaltet, ferner umfassend, für jedes von zwei oder mehreren der Datenverarbeitungssysteme:
• Erfassen von Trainingsdaten durch den zumindest einen Sensor des Datenverarbeitungssystems, wobei sich die erfassten Trainingsdaten zumindest teilweise von den Trainingsdaten, die durch die anderen der Datenverarbeitungssysteme erfasst werden, unterscheiden;
• Erzeugen des trainierten Modells der Vorhersageprogramms des Datenverarbeitungssystems durch Trainieren eines untrainierten Modells auf den erfassten Trainingsdaten.

10. Computerimplementiertes Verfahren nach einem der vorigen Ansprüche, wobei die IO-Tupel jedes der trainierten Modelle Ergebnisse eines maschinellen Lernprozesses während des Trainingsprozesses sind.

11. Computerimplementiertes Verfahren nach einem der vorigen Ansprüche,
- wobei die Synchronisation automatisch und wiederholt durchgeführt wird; und/oder
- wobei die trainierten Modelle automatisch unter Verwendung zusätzlicher Trainingsdaten erneut trainiert werden.

12. Computerimplementiertes Verfahren nach einem der vorigen Ansprüche, wobei die Berechnung der Vorhersage ausgewählt ist aus einer Gruppe umfassend:
- Vorhersage des Materialzustands, insbesondere des Materialversagens, auf Basis gemessener Schwingungsmesswerte eines Materials;
- Prüfung der Identität von Personen auf Basis von Bilddaten und/oder biometrischen Daten;
- Berechnung eines Audiosignals, das gesprochenen Text in einer natürlichsprachlichen Sprache kodiert, auf Basis eines natürlichsprachlichen Eingabetextes;
- Berechnung eines Übersetzungstextes einer natürlichsprachlichen Zielsprache auf Basis eines Eingabetextes in einer natürlichsprachlichen Ausgangssprache;
- Berechnung eines natürlichsprachlichen Textes auf Basis eines Audiosignals, das gesprochenen Text in einer natürlichsprachlichen Sprache kodiert.

13. Computerimplementiertes Verfahren nach einem der vorigen Ansprüche, wobei das Training jedes der Modelle umfasst:
- Ermittlung von I-Tupeln durch Analyse der Tokenliste, wobei I-Tupel jeweils aus ein oder mehreren Inputtoken bestehen, deren Auftreten innerhalb der Inputdatensätze mit zumindest einer Mindeststärke korreliert; und/oder
- Ermittlung von O-Tupeln durch Analyse der Tokenliste, wobei O-Tupel jeweils aus ein oder mehreren Outputtoken bestehen, deren Auftreten innerhalb der Outputdatensätze mit zumindest einer Mindeststärke korreliert;
- Speicherung der I-Tupel und/oder O-Tupel als Ergebnis des Lernens in das Modell.

14. System (430) beinhaltend:
- zumindest einen Prozessor (434.1, 434.2, 434.3);
- zumindest ein Speichermedium mit Instruktionen, die bei Ausführung durch den zumindest einen Prozessor, den Prozessor veranlassen zur:
∘ Bereitstellen (1402) mehrerer Vorhersageprogramme (436.1, 436.2, 436.3), die jeweils zur Berechnung des gleichen Vorhersageproblems dienen und die jeweils dazu konfiguriert sind, eine Vorhersagen auf Basis eines Machine-Learning (ML)-Modells (122.1, 122.2, 122.3) zu berechnen;
∘ Trainieren (1404) der Modelle der Vorhersageprogramme auf unterschiedlichen Trainingsdaten, wobei die Trainingsdaten jeweils eine Vielzahl von Input-Datensätzen und Output-Datensätzen, die jeweils einem der Input-Datensätze zugeordnet sind, umfassen, wobei jeder Inputdatensatz eine Sequenz von ein oder mehreren Inputtoken ist und jeder Outputdatensatz eine Sequenz von ein oder mehreren Outputtoken ist, wobei das Training jedes der Modelle umfasst:
▪ Erzeugung einer nichtredundanten Tokenliste aus den Inputtoken und Outputtoken, wobei jedes Token in der semantikfreien Tokenliste nur einmal vorkommt unabhängig davon, ob es ein Inputtoken und/oder ein Outputtoken repräsentiert, wobei jedes Token in der semantikfreien Liste verknüpft gespeichert ist mit Referenzen auf die jeweiligen Inputdatensätze und Outputdatensätze, die dieses Token beinhalten, sowie verknüpft gespeichert ist mit der Position des Tokens innerhalb des jeweiligen Input- oder Outputdatensatzes;
▪ Ermittlung von IO-Tupeln durch Analyse der Tokenliste, wobei IO-Tupel jeweils aus ein oder mehreren Inputtoken und ein oder mehreren Outputtoken bestehen, welche innerhalb einander zugeordneter Paare an Inputdatensätzen und Output-Datensätzen mit zumindest einer Mindeststärke korrelieren; und
▪ Speicherung des Tokenliste und der IO-Tupel als Ergebnis des Lernens in das Modell;
∘ Synchronisation (1406) der Modelle derart, dass jedes Modell nach der Synchronisation die gleiche Tokenliste und den gleichen Satz an IO-Tupeln beinhaltet;
∘ Eingabe (1408) von Eingabedaten in eines der Vorhersageprogramme; und
∘ Berechnung (1410) einer Vorhersage auf Basis der Eingabedaten durch das eine Vorhersageprogramm unter Verwendung des synchronisierten Modells dieses einen Vorhersageprogrammes.

15. System nach Anspruch 14,
- wobei das System mehrere Datenverarbeitungssysteme enthält und die mehreren Vorhersageprogramme und deren jeweilige Modelle auf unterschiedlichen der Datenverarbeitungssysteme instanziiert sind, und/oder
- wobei das System ein zentrales Datenverarbeitungssystem enthält, welches dazu ausgebildet ist, zumindest Teile der Modelle der Datenverarbeitungssysteme zu empfangen, in ein nicht-redundantes Modell zu integrieren und das integrierte Modell an die Datenverarbeitungssysteme zurückzuübertragen; und/oder
- wobei die Vorhersageprogramme jeweils Schnittstellen zum Austausch von zumindest Teilen ihrer Modelle mit jeweils anderen der Vorhersageprogramme über ein Netzwerk haben und die Vorhersageprogramme dazu ausgebildet sind, von anderen Vorhersageprogramme erhaltene Teile von Modellen in das eigene Modell zu integrieren um eine Synchronisation der Modelle zu bewirken.
